# EUROPEAN PATENT APPLICATION

(11) **EP 4 404 343 A1**
(43) Date of publication of application: **24.07.2024**
(21) Application number: 22946095.1
(22) Date of filing: 13.06.2022
(51) Int. Cl.: H01M 50/20, H01M 10/625, B60K 1/04

(54) **BATTERY PACK AND ELECTRIC DEVICE**

(71) Applicant: Contemporary Amperex Technology Co., Limited, Ningde City, Fujian 352100 (CN)
(72) Inventor: CHEN, Xingdi, Ningde, Fujian 352100 (CN); WANG, Peng, Ningde, Fujian 352100 (CN); SUN, Zhanyu, Ningde, Fujian 352100 (CN)
(74) Representative: Rowlands, Stuart Michael
(86) International application number: PCT/CN2022/098373
(87) International publication number: WO 2023/240394

(57) **Abstract**

The present application provides a battery pack (100) and an electric device, which comprise a case (10) and battery cells (20). The case (10) encloses an accommodating cavity (s). The case (10) comprises a bearing member (11a) which is arranged at the top of the case (10) and used for defining the accommodating cavity (s). The battery cells (20) are accommodated in the accommodating cavity (s). The bearing surface (f) of the bearing member (11a) facing the accommodating cavity (s) is configured to be planar. The battery cells (20) are disposed on the bearing surface (f).

## Description

### TECHNICAL FIELD

The present application relates to the technical field of batteries, and in particular, to a battery pack and an electrical apparatus.

### BACKGROUND

With the increasing sophistication of new energy technologies, new energy vehicles have gradually come to the attention of the public. The main core technology of a new energy vehicle lies in a battery pack, and safety and stability of the battery pack directly determine the performance of the overall vehicle.

The range of the battery pack has always been a focus of attention in the field of new energy vehicles. The range of the current battery pack is generally low, and improving the range of the battery pack is an urgent problem to be solved.

### SUMMARY OF THE INVENTION

In view of this, the present application provides a battery pack and an electrical apparatus.

In a first aspect, the present application provides a battery pack, including a box body and a battery cell, wherein the box body encloses to form an accommodating cavity, the box body includes a carrier located at the top and used for defining the accommodating cavity, and the battery cell is accommodated in the accommodating cavity. The carrier has a carrying surface facing the accommodating cavity, and the carrying surface is constructed as a plane.

In the solution of the present application, when the carrying surface is a plane, the carrying surface may keep relatively equal distances (this distance may be zero) with the various battery cells accommodated in the accommodating cavity. When the distances between the carrying surface and the battery cells are kept relatively equal, the accommodating cavity is capable of accommodating more battery cells. In other words, the space utilization rate of the accommodating cavity is higher, the battery pack is capable of having a higher energy density, and the battery pack has a higher range.

In some embodiments, in a vertical direction, an area N1 of an orthographic projection of the carrying surface and an area N2 of an orthographic projection of the carrier meet: N1/N2≥0.2. At this point, the energy density of the battery pack is high and the range is high.

In some embodiments, the orthographic projection of the carrying surface is rectangular in the vertical direction. At this point, it is conducive to arranging more battery cells in the accommodating cavity, thereby improving the energy density of the battery pack.

In some embodiments, the carrier has a carrying portion and a connecting portion, the connecting portion encloses and is connected to an edge of the carrying portion, the carrying portion is used for defining the accommodating cavity, and the connecting portion is connected to a part of the box body other than the carrier; wherein an inner surface of the carrying portion facing the accommodating cavity is constructed to form the carrying surface. At this point, the carrier defines the accommodating cavity by the carrying portion, and implements connection to a structure of a main body other than the carrier by the connecting portion, so that the structure is clear.

In some embodiments, the carrying portion is arranged to protrude in a direction away from the accommodating cavity with respect to the mounting portion. When the carrying portion protrudes away from the accommodating cavity with respect to the connecting portion, the carrying portion can serve as a reinforcing structure for the carrier, thereby improving the bending performance of the carrier.

In some embodiments, an outer surface of the carrying portion away from the accommodating cavity is parallel to the carrying surface. When the battery pack is mounted on a vehicle, the carrying portion with the planar outer surface is capable of reducing a driving resistance of the vehicle, reducing the driving energy consumption of the vehicle, and improving the range of the battery pack.

In some embodiments, the battery cell is suspended from the carrying surface. At this point, the carrying surface is a plane, and therefore, the carrying surface can have a large contact area with the battery cell arranged on itself, so that mounting of the battery cell is more stable. At the same time, when the carrying surface is planar, compared with an uneven surface such as a curved surface, the carrying surface is capable of being connected to a larger quantity of battery cells, which can increase the mounting quantity of the battery cells inside the battery pack, thereby improving the space utilization and energy density of the battery pack. At the same time, during repairing of the battery pack, the battery cell may be disassembled and assembled from below the carrier. Especially when the carrier, as at least a part of a vehicle chassis, is subjected to a force, the battery cell only needs to be disassembled and assembled from below the carrier, and it is unnecessary to remove the carrier, which facilitates the maintenance of the battery pack.

In some embodiments, an outer surface of the battery cell facing the carrier is a first outer surface, the battery cell includes electrode terminals, and the electrode terminals are arranged on an outer surface of the battery cell other than the first outer surface. At this point, at this point, the electrode terminals are located on the outer surface of the battery cell other than the first outer surface. Various components (such as a sampling wiring harness, a high-voltage wiring harness, and a protective structure) connected to the various electrode terminals may be arranged in a space between the battery cell and a bottom cover and/or a space between the battery cell and an inner side of the main body, thereby being more conducive to the arrangement of the various components. Moreover, at this point, by connecting the first outer surface without arranging the electrode terminals to the carrier, it is capable of achieving attaching of the battery cell to the carrier, thereby saving the space between the battery cell and the carrier, and improving the space utilization rate of the battery pack.

In some embodiments, the battery cell has a second outer surface arranged opposite to the first outer surface, and the electrode terminals are arranged on the second outer surface. At this point, there is a buffer space between the second outer surface and the bottom cover, and the parts of the electrode terminals that extend out of the battery cell are located within the buffer space. Therefore, a wiring harness and a connecting sheet connected to the electrode terminals may be arranged within the buffer space. At the same time, the buffer space is further capable of blocking an external force hitting the bottom cover from affecting the battery cell to damage the battery cell. Therefore, the buffer space is not only capable of interrupting the impact of the external force, but also capable of allowing for the layout of wiring harnesses and the like, thereby achieving two goals with one stone.

In some embodiments, the battery cell is bonded to the carrier. At this point, not only the connection between the battery cell and the carrier is convenient, but also the structure of the battery pack can be simplified.

In some embodiments, the box body further includes a bottom cover located at the bottom of itself, the bottom cover is used for defining the accommodating cavity, and the bottom cover is arranged at an interval from the battery cell. At this point, an external force acting on the bottom cover may be prevented from being transmitted to the battery cell to damage the battery cell. Especially when the battery pack is mounted at the bottom of the vehicle and the bottom cover is at the lowest position of the battery pack, stones and other objects on the ground can easily fly to the bottom of the battery pack and hit the bottom cover in a driving process of the vehicle. At this point, the buffer space can interrupt the transmission of external forces to the battery cell and avoid an impact on the battery cell.

In some embodiments, the box body further includes a bottom cover and a frame. The frame encloses to form a cavity of which both ends in the vertical direction are run through. The bottom cover and the carrier respectively cover the opposite ends of the cavity in the vertical direction, and the bottom cover, the frame, and the carrier jointly enclose to form the accommodating cavity. At this point, based on the frame, the carrier and bottom cover are connected to both ends of the frame in the vertical direction, the accommodating cavity of the battery pack can be formed, and the structure of the box body is relatively simple.

In some embodiments, the carrier is fixedly connected to or integrally formed with the frame. When the carrier and the frame are integrally formed, the main body is formed as a whole, and the main body only needs to be connected to the bottom cover to achieve assembling of the box body, so that the assembling of the box body is convenient. When the carrier is fixedly connected to the frame, forming processes of the carrier and the frame are relatively easy, which can reduce the process cost of the box body.

In a second aspect, the present application further provides an electrical apparatus, including the above battery pack, the battery pack being used for providing electric energy to the electrical apparatus.

In some embodiments, the electrical apparatus includes a vehicle, and the battery pack is arranged at the bottom of the vehicle body. At this point, arranging the battery pack at the bottom of the vehicle body will not occupy any internal space of the vehicle body, which helps reduce the volume and weight of the vehicle body.

In some embodiments, in the vertical direction, a distance L between the carrier and the vehicle body meets: L≥0. At this point, when the distance L between the carrier and the vehicle body is equal to zero, the battery pack is capable of having a larger battery capacity and a higher energy density, and the vehicle has a strong range. When the distance L between the carrier and the vehicle body is greater than zero, the mounting of the carrier is relatively flexible.

In some embodiments, the battery pack is mounted on the vehicle body through the carrier. When the battery cell is arranged on the carrier, the structure formed by the battery cell and the carrier is connected to the vehicle body, which can improve the top strength of the battery pack and thus enhance the mounting strength of the battery pack.

In some embodiments, the carrier is configured to form at least a part of the chassis of the vehicle body. At this point, the space occupied by a gap between the traditional chassis and the battery pack may be included in the battery pack to increase the space of the battery pack, which helps increase the energy of the battery pack and thus improve the range of the vehicle.

Details of one or more embodiments of the present application are presented in the accompanying drawings and descriptions below. Other features, purposes, and advantages of the present application will become apparent from the description, accompanying drawings, and claims.

### DESCRIPTION OF DRAWINGS

Various other advantages and benefits will become clear for those of ordinary skill in the art by reading detailed descriptions of the following preferred embodiments. The accompanying drawings are merely used for showing the preferred embodiments, and are not construed as limiting the present application. In all accompanying drawings, identical components are represented by identical reference numerals. In the drawings:
Fig. 1 is a schematic structural view of a vehicle according to some embodiments of the present application;
Fig. 2 is a schematic structural view of a battery cell according to some embodiments of the present application;
Fig. 3 is a schematic structural view of a battery pack according to some embodiments of the present application;
Fig. 4 is an exploded structural view of the battery pack shown in Fig. 3;
Fig. 5 is a schematic structural view of a bottom cover according to some embodiments of the present application;
Fig. 6 is a top view of the bottom cover described in Fig. 5;
Fig. 7 is a front view of the bottom cover shown in Fig. 5;
Fig. 8 is a schematic structural view of a bottom cover according to some other embodiments of the present application;
Fig. 9 is a sectional view of the battery pack shown in Fig. 4;
Fig. 10 is a schematic view of an orthographic projection of the bottom cover shown in Fig. 6 in a vertical direction;
Fig. 11 is a schematic profile view of a battery cell according to some embodiments of the present application;
Fig. 12 is a front view of the battery cell shown in Fig. 11;
Fig. 13 is a schematic structural view of a carrier according to some embodiments of the present application;
Fig. 14 is a schematic structural view of a carrier according to some other embodiments of the present application;
Fig. 15 is a view of an orthographic projection of the carrier shown in Fig. 14 in the vertical direction;
Fig. 16 is a front view of the battery pack shown in Fig. 4;
Fig. 17 is a schematic view of applying a battery pack in a vehicle body according to some embodiments of the present application;
Fig. 18 is a first exploded state view of the structure shown in Fig. 17;
Fig. 19 is a second exploded state view of the structure shown in Fig. 17; and
Fig. 20 is a schematic view of a mounting relationship between a battery pack and a vehicle body according to some embodiments of the present application.

1000. Vehicle; 100. Battery pack; 200. Vehicle body; 10. Box body; 11. Main body; 11a. Carrier; 11a1. Carrying portion; 11a2. Connecting portion; 11b. Frame; 12. Bottom cover; 12a. Cover portion; 12b. Mounting portion; 12c. Fixing hole; 13. Fastener; s. Accommodating cavity; q. Cavity; f. Carrying surface; f1. First carrying edge; f2. Second carrying edge; f3. Third carrying edge; f4. Fourth carrying edge; d. Feature surface; d1. First feature edge; d2. Second feature edge; d3. Third feature edge; d4. Fourth feature edge; 20. Battery cell; 21. End cover; 21a. Electrode terminal; 22. Case; 23. Electrode assembly; m1. First outer surface; m2. Second outer surface; m3. Third outer surface.

### DETAILED DESCRIPTION

Embodiments of the technical solutions of the present application will be described in detail below with reference to the accompanying drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first," "second," and the like are used only to distinguish between different objects, and are not to be understood as indicating or implying a relative importance or implicitly specifying the quantity, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," and the like are based on the orientation or position relationship shown in the drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, battery packs are increasingly more widely used. The battery packs are used not only in energy storage power source systems such as hydraulic, thermal, wind, and solar power stations, but also in electric vehicles such as electric bicycles, electric motorcycles, and electric cars, as well as a plurality of fields such as military equipment and aerospace. With continuous expansion of the application fields of the battery pack, the market demand is also constantly expanding.

The inventor noticed that a top cover of a box body of an existing battery pack is often provided with reinforcing ribs and other structures, and the reinforcing ribs occupy the internal space of the box body, resulting in a limited quantity of battery cells arranged inside the box body, which is not conducive to improving the range of the battery pack.

In order to improve the range of the battery pack, the applicant has found through research that the top cover of the box body may be designed in a flat plate shape to reduce the occupation of the top cover itself on the accommodating cavity, and to allocate as much space as possible for mounting battery cells, thereby improving the energy density and the range of the battery pack.

Based on the above considerations, in order to improve the safety and service life of the battery pack, the inventor has conducted in-depth research and designed a battery pack. The battery pack includes a box body and a battery cell, wherein the box body encloses to form an accommodating cavity, the box body includes a carrier located at the top and used for defining the accommodating cavity, and the battery cell is accommodated in the accommodating cavity. The carrier has a carrying surface facing the accommodating cavity, and the carrying surface is constructed as a plane. At this point, when the carrying surface is a plane, the carrying surface may keep relatively equal distances (this distance may be zero) with the various battery cells accommodated in the accommodating cavity. When the distances between the carrying surface and the battery cells are kept relatively equal, a ratio of space occupation of the battery cells in the accommodating cavity is higher. In other words, the space utilization rate of the accommodating cavity is higher, the battery pack is capable of having a higher energy density, and the battery pack has a higher range.

The battery pack disclosed in the embodiments of the present application can be used, but is not limited to, in an electrical apparatus such as a vehicle, a ship, or an aircraft. The battery pack disclosed in the present application can be used to form a power source system of the electrical apparatus. A mounting body referred to in the present application is a structure used for mounting the battery pack in the electrical apparatus.

The embodiments of the present application provide an electrical apparatus that uses a battery pack as a power source, and the electrical apparatus may be, but is not limited to, a mobile phone, a tablet, a laptop, an electric toy, an electric tool, a battery vehicle, an electric vehicle, a ship, a spacecraft, and the like. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of description, the following embodiments are illustrated with an example in which the electrical apparatus according to an embodiment of the present application is a vehicle 1000.

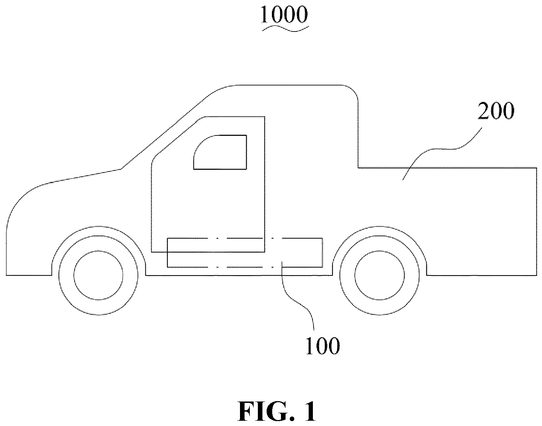

Referring to Fig. 1, Fig. 1 is a schematic structural view of the vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The interior of the vehicle 1000 is provided with a battery pack 100, and the battery pack 100 may be arranged at the bottom, head, or tail of the vehicle 1000. The battery pack 100 may be used for powering the vehicle 1000. For example, the battery pack 100 may be used as an operating power source of the vehicle 1000. The vehicle 1000 may further include a controller and a motor. The controller is used for controlling the battery pack 100 to power the motor. For example, the controller is used for meeting the operating power demand when the vehicle 1000 is starting, navigating, and driving.

In some embodiments of the present application, the battery pack 100 not only may serve as an operating power source of the vehicle 1000, but also may serve as a driving power source of the vehicle 1000, thus replacing or partially replacing fuel or natural gas to provide driving power for the vehicle 1000.

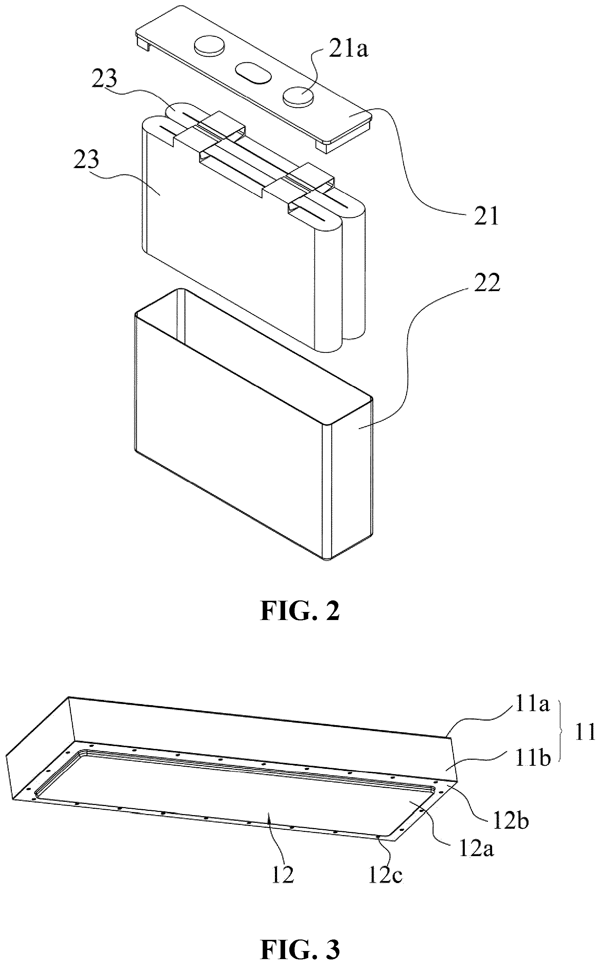

Referring to Fig. 2, Fig. 2 is a schematic structural view of a vehicle 1000 according to some embodiments of the present application. A battery cell 20 refers to the smallest unit that forms the battery pack 100. As shown in Fig. 2, the battery cell 20 includes an end cover 21, a case 22, an electrode assembly 23, and other functional components.

The end cover 21 refers to a component that covers an opening of the case 22 to isolate an internal environment of the battery cell 20 from an external environment. Unlimitedly, the shape of the end cover 21 may adapt to the shape of the case 22 to fit the case 22. Optionally, the end cover 21 may be made of a material with a certain hardness and strength (such as aluminum alloy), and in this way, the end cover 21 is less prone to deformation when subjected to compression and collision, so that the battery cell 20 is capable of having a higher structural strength and improved safety. Functional components such as electrode terminals 21a may be arranged on the end cover 21. The electrode terminals 21a may be used for being electrically connected to the electrode assembly 23, for outputting or inputting electric energy of the battery cell 20. In some embodiments, a pressure relief mechanism for relieving an internal pressure when the internal pressure or temperature of the battery cell 20 reaches a threshold may further be arranged on the end cover 21. The end cover 21 may be made of various materials, such as copper, iron, aluminum, stainless steel, aluminum alloy, and plastic, which is not specially limited in the embodiments of the present application. In some embodiments, an insulating member may also be arranged on an inner side of the end cover 21, and the insulating member may be used for isolating an electrical connecting portion 11a2 component in the case 22 from the end cover 21 to reduce the risk of short circuit. For example, the insulating member may be plastic, rubber, and the like.

The case 22 is a component used for fitting the end cover 21 to form the internal environment of the battery cell 20, wherein the formed internal environment may be used for accommodating the electrode assembly 23, an electrolyte solution, and other components. The case 22 and the end cover 21 may be independent components, an opening may be arranged on the case 22, and at the opening, the end cover 21 covers the opening to form the internal environment of the battery cell 20. Unlimitedly, the end cover 21 and the case 22 may also be integrated. Specifically, the end cover 21 and the case 22 may form a common connection surface before other components enter the case. When it is necessary to encapsulate the interior of the case 22, the end cover 21 may then cover the case 22. The case 22 may be of various shapes and sizes, such as rectangular, cylindrical, and hexagonal prism shaped. Specifically, the shape of the case 22 may be determined according to the specific shape and size of the electrode assembly 23. The case 22 may be made of various materials, such as copper, iron, aluminum, stainless steel, aluminum alloy, and plastic, which is not specially limited in the embodiments of the present application.

The electrode assembly 23 is the component in which an electrochemical reaction occurs in the battery cell 20. One or more electrode assemblies 23 may be included in the case 22. The electrode assembly 23 is mainly formed by winding or stacking a positive electrode plate and a negative electrode plate, and usually has a separator arranged between the positive electrode plate and the negative electrode plate. Parts of the positive electrode plate and the negative electrode plate with active materials constitute the main body 11 portion of the electrode assembly 23, while parts of the positive electrode plate and the negative electrode plate without active materials are constituted respectively. A positive tab and a negative tab may be located at one end of the main body 11 portion together or at two ends of the main body 11 portion respectively. In charging and discharging processes of a battery, the positive active material and the negative active material react with the electrolyte solution, and the tabs are connected to the electrode terminals 21a to form a current loop.

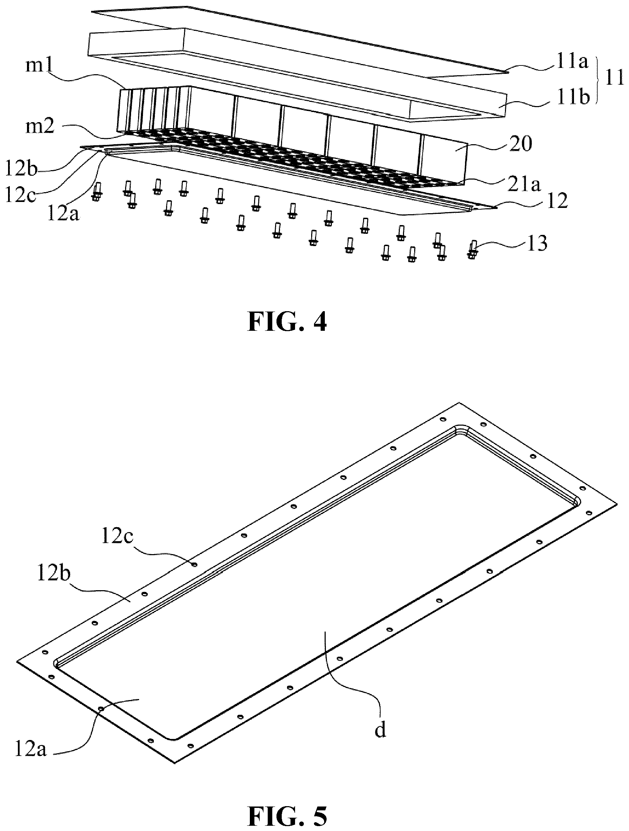

Fig. 3 is a schematic structural view of a battery pack 100 according to some embodiments of the present application, and Fig. 4 is an exploded structural view of the battery pack 100 shown in Fig. 3. According to some embodiments of the present application, referring to Fig. 3 and Fig. 4, the embodiments of the present application provide a battery pack 100, including a battery cell 20 and a box body 10. The box body 10 is provided with an accommodating cavity s, and the battery cell 20 is accommodated in the accommodating cavity s.

In the battery pack 100, there may be a plurality of battery cells 20, and the plurality of battery cells 20 may be in series connection, parallel connection, or parallel-series connection, wherein the parallel-series connection refers to that the plurality of battery cells 20 are connected in both series and parallel. The plurality of battery cells 20 may be directly in series connection, parallel connection, or parallel-series connection, and then the whole composed of the plurality of battery cells 20 may be accommodated in the box body 10. Of course, the battery pack 100 may also be in the form of battery modules each composed of a plurality of battery cells 20 that are in series connection, parallel connection, or parallel-series connection first, and the plurality of battery modules are then in series connection, parallel connection, or parallel-series connection to form a whole and accommodated in the box body 10. The battery pack 100 may further include other structures, for example, the battery pack 100 may further include a convergence component for implementing electrical connection between the plurality of battery cells 20. Each battery cell 20 may be a secondary battery or a primary battery; or may be a lithium-sulfur battery, a sodium-ion battery, or a magnesium-ion battery, but is not limited thereto. The battery cell 20 may be in the shape of a cylinder, a flat body, a cuboid, or others.

The box body 10 may be of various shapes, such as a cylinder and a cuboid, and a specific construction of the box body 10 may adopt various structural modes.

In some embodiments, still referring to Fig. 3 and Fig. 4, the box body 10 includes the main body 11 and a bottom cover 12 arranged at the bottom of the main body 11. The bottom cover 12 encloses, together with the main body 11, to form the accommodating cavity s for accommodating the battery cell 20.

The main body 11 may be an integrally formed structure or formed by assembling a plurality of components. The main body 11 may be a hollow case 22 structure, which defines a first space, the bottom of the first space is open, and the bottom cover 12 covers the open position of the first space. The bottom cover 12 may be a hollow structure with an opening on one side, and it may have a second space. The second space provided by the bottom cover 12 and the first space provided by the main body 11 together form the accommodating cavity s. The bottom cover 12 itself may not have the space for forming the accommodating cavity s. When the bottom cover 12 covers the open position of the first space provided by the main body 11, the bottom cover 12 seals the first space provided by the main body 11, and the two enclose to form the accommodating cavity s equivalent to the first space. At this point, the bottom cover 12 may be of a flat plate shaped structure. Of course, the accommodating cavity s of the box body 10 may also be formed by a part of the first space provided by the main body 11. At this point, the bottom cover 12 may cover the open position of the first space and recess towards the first space to occupy a partial space of the first space. The first space other than the partial space occupied by the bottom cover 12 forms the accommodating cavity s of the box body 10.

It is understandable that at this point, the bottom cover 12 is located at the bottom of the box body 10 and is used for defining the accommodating cavity s together with the main body 11. Specifically, the bottom cover 12 may be, but is not limited to, a plate shaped structure, a block shaped structure, or a flat or curved plate shaped structure, or the like, which is not specifically limited.

When the battery cell 20 is located in the accommodating cavity s, the battery cell 20 may be arranged on the bottom cover 12 and/or the main body 11.

When the main body 11 is formed by assembling a plurality of components, the battery cell 20 may be arranged on one of the components or arranged on all the components. In an embodiment, the main body 11 may include a top cover (not shown), a hoarding (not shown), and a supporting plate (not shown). The hoarding encloses to form a third space with openings at both ends in the vertical direction. The top cover and the bottom cover 12 respectively seals and covers the two ends of the third space in the vertical direction. The top cover, the hoarding, and the bottom cover 12 together enclose to form the accommodating cavity s. The supporting plate is located in the third space, and the battery cell 20 is supported on the supporting plate. In other embodiments, the main body 11 may include a carrier 11a and a frame 11b described below, details are described specifically below.

The bottom cover 12 and the main body 11 may be fixed by welding, hot melt connection, bonding, fastening connection, snap-fit, and other methods. The fastening connection refers to a connection implemented through a fastener 13, and the fastener 13 includes a component such as a bolt, a latch, a rivet, a pin, and a screw. The snap-fit refers to a fixation implemented through a snap-fit structure. For example, a hook is provided on the bottom cover 12 and a notch is provided on the main body 11. When the hook is snap-fitted in the notch, the snap-fit and fixation of the bottom cover 12 and the main body 11 may be achieved. Of course, the connection method between the bottom cover 12 and the main body 11 is not limited to this and will not be exhaustive in the present application.

In some embodiments, the bottom cover 12 is sealed with and connected to the main body 11 to form the closed accommodating cavity s.

There are various methods to seal and connect the bottom cover 12 to the main body 11, including but not limited to: arranging a sealing member between the bottom cover 12 and the main body 11, and sealing and connecting the bottom cover 12 and the main body 11 through the sealing member; sealing and connecting the bottom cover 12 and the main body 11 through a sealant; and sealing and connecting through a blocking structure formed by a plug-connecting surface by plug-connecting the bottom cover 12 and the main body 11 with each other.

At this point, the box body 10 of the battery pack 100 forms the sealed accommodating cavity s by enclosing its own bottom cover 12 and its own main body 11, and there is no need to additionally arrange other sealing structures inside the box body 10, which can simplify the structure of the battery pack 100, reduce the cost of the battery pack 100, and ensure the safety and service life of the battery pack 100.

In the description of the present application, the bottom cover 12 of the battery pack 100 is located at the bottom of the main body 11, that is, in an up and down orientation indicated in Fig. 3 and Fig. 4, the bottom cover 12 is located at the bottom of the main body 11. In practical use, the up and down orientation shown in Fig. 3 and Fig. 4 may be, but is not limited to, the vertical direction, depending on an actual mounting situation of the battery pack 100. It should be pointed out that in the following description of the present application, the description of the position relationship, size, and the like of various structures of the battery pack 100 using the vertical direction as a reference is not a limitation to the usage of the battery pack 100 structure, but only for a clearer explanation and illustration of the solution.

In some embodiments, the bottom cover 12 is sealed with and connected to the main body 11 through a sealing member.

The sealing member refers to a component capable of preventing fluid, solid particles, or the like from leaking from between adj acent joint surfaces, and preventing external impurities such as dust and moisture from invading into the battery pack 100. The sealing member seals and connects the main body 11 and the bottom cover 12, which refers to that the sealing member is connected between two opposite surfaces of the main body 11 and the bottom cover 12, and has circular contact interfaces between it and the two surfaces, which is capable of preventing external moisture from entering the interior of the battery pack 100 through the contact sections between it and the two surfaces, thereby achieving a sealing effect.

The sealing member may optionally be a sealing ring or a gasket. Specifically, the sealing member may optionally be made of a material such as rubber and silicone. Specifically, the sealing member may optionally be an O-ring sealing member, a square sealing member, an irregular-shaped sealing member, and the like. The specific shape of the sealing member may fit the shape of the two opposite surfaces of the bottom cover 12 and the main body 11. For example, when the two opposite surfaces of the bottom cover 12 and the main body 11 are circular surfaces, the sealing member may be an O-ring sealing member.

At this point, the bottom cover 12 is sealed with and connected to the main body 11 through the sealing member, and the sealing is reliable and cost-effective.

It should be noted that after the bottom cover 12 is sealed with the main body 11 through the sealing member, it may also be fixedly connected to the main body 11 through other methods. The other methods include, but are not limited to, snap-fit, plug-connecting, connecting through a threaded part, riveting, welding, bonding, and the like. It is understandable that when the bottom cover 12 is sealed with the main body 11 through a sealant, according to the adhesive property of the sealant, when the adhesive performance of the sealant meets a requirement (that is, the bottom cover 12 is fixed to and not separated from the main body 11), other methods may not be used to fixedly connect the two.

In some embodiments, the bottom cover 12 is detachably connected to the bottom of the main body 11.

The bottom cover 12 is detachably connected to the main body 11, which refers to that when the bottom cover 12 is connected to the main body 11, with respect to the main body 11, the bottom cover 12 has a first state of being completely connected to the main body 11 and forming the accommodating cavity s and a second state of being not completely connected to or separated from the main body 11 to be capable of exposing the battery cell 20. Under the operation of an external force, the bottom cover 12 may be switched from the first state to the second state and may be switched from the second state to the first state, without damaging any parts in this process.

When the bottom cover 12 has the second state of being not completely connected to the main body 11 and causing the accommodating cavity s to open with respect to the main body 11, the mounting method of the bottom cover 12 and the main body 11 may be that: the bottom cover 12 is rotatably connected to the main body 11, and may achieve fixed connection through the fastener 13 or the snap-fit method. When the bottom cover 12 rotates with respect to the main body 11 to close the accommodating cavity s, the bottom cover 12 may be fixedly connected to the main body 11 through the fastener 13 or the snap-fit method. The battery cell 20 is accommodated in the accommodating cavity s and is invisible, and at this point, the bottom cover 12 is in the first state. When the fastener 13 is disassembled or the snap-fit connection is released, the bottom cover 12 is capable of rotating with respect to the main body 11 to a position of opening the accommodating cavity s and exposing the battery cell 20. At this point, the bottom cover 12 is in the second state. The rotatable connection between the bottom cover 12 and the main body 11 may be, but is not limited to, the rotatable connection between the bottom cover 12 and the main body 11 through a rotating shaft.

When the bottom cover 12 has the second state of being separated from the main body 11 and causing the accommodating cavity s to open with respect to the main body 11, the mounting method of the bottom cover 12 and the main body 11 may be that: fixed connection between the bottom cover 12 and the main body 11 is implemented only through the fastener 13 or the snap-fit method. When the fastener 13 is mounted on the bottom cover 12 and the main body 11, or the bottom cover 12 is snap-fitted to the snap-fit structure of the main body 11, the bottom cover 12 and the main body 11 are completely fixed and together form the accommodating cavity s. The battery cell 20 is accommodated in the accommodating cavity s and is invisible, and at this point, the bottom cover 12 is in the first state. When the fastener 13 is disassembled or all snap-fit connections are released, the bottom cover 12 may be detached from the main body 11, thereby exposing the battery cell 20. At this point, the bottom cover 12 is in the second state.

The bottom cover 12, when in the first state, forms the accommodating cavity s with the main body 11, which can protect the battery cell 20. The bottom cover 12, when in the second state, exposes the body of the battery pack 100, which facilitates maintenance or replacement of the battery cell 20 by relevant personnel.

In some embodiments, referring to Fig. 4, the bottom cover 12 is detachably connected to the main body 11 through the fastener 13.

The fastener 13 refers to a component that is capable of fastening and connecting two or more parts (or components) into a whole, including but not limited to a screw, a bolt, a rivet, a latch, a pin, a welding stud, and the like.

At this point, the bottom cover 12 and the main body 11 may be detachably connected through the fastener 13, which is not only convenient for disassembling and assembling, but also has a simple structure and is cost-effective.

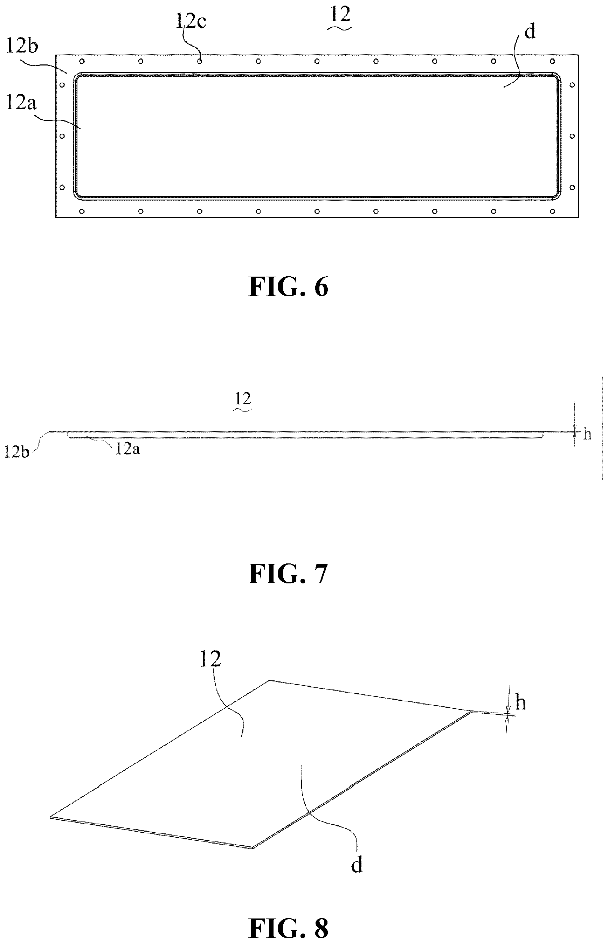

Fig. 5 is a schematic structural view of a bottom cover 12 according to some embodiments of the present application, Fig. 6 is a top view of the bottom cover 12 described in Fig. 5, and Fig. 7 is a front view of the bottom cover 12 shown in Fig. 5. Fig. 8 is a schematic structural view of a bottom cover 12 according to some other embodiments of the present application.

In some embodiments, the minimum thickness h of the bottom cover 12 meets: 0.2 mm<h<20 mm.

The thickness of the bottom cover 12 refers to a distance between surfaces on two sides in the vertical direction of the bottom cover 12 on a section in the vertical direction. The minimum thickness h of the bottom cover 12 is the shortest distance between the two side surfaces of the bottom cover 12 in the vertical direction. When the thickness of the bottom cover 12 is uniform in all parts, the bottom cover 12 may be in a flat plate shape (as shown in Fig. 8), and the minimum thickness of the bottom cover 12 is the equal thicknesses of various parts of the bottom cover 12. When the thickness of the bottom cover 12 is uneven, the minimum thickness of the bottom cover 12 is the thickness at the thinnest position of the bottom cover 12.

Specifically, the minimum thickness h of the bottom cover 12 may optionally be 0.3 mm, 0.5 mm, 0.8 mm, 1 mm, 1.5 mm, 1.8 mm, 2 mm, 2.5 mm, 2.8 mm, 3 mm, 3.5 mm, 3.8 mm, 4 mm, 4.5 mm, 4.7 mm, 5 mm, 5.5 mm, 5.8 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, 16 mm, 16.5 mm, 17 mm, 17.5 mm, 18 mm, 18.5 mm, 19 mm, 19.5 mm, and the like. Preferably, 0.5 mm≤h≤3 mm.

At this point, it has been proven that when the minimum thickness h of the bottom cover 12 meets 0.2 mm<h<20 mm, it is capable of effectively reducing the weight of the battery pack 100, and having a reasonable structure strength.

It should be noted that in the description of the present application, the vertical direction is used as a reference, and the "thickness" of a certain structure refers to a distance between surfaces on two sides in the vertical direction of the structure on a section in the vertical direction. The following description does not provide too much explanation for "thickness," which may be obtained with reference to the description here. Of course, it is understandable that the vertical direction is only for the convenience of explaining the solution of the present application, and is not a limitation to the usage of the battery pack 100.

In some embodiments, the weight m of the battery cell 20 and the minimum wall thickness h of the bottom cover 12 meet: 0.03 mm/Kg≤h/m≤100 mm/Kg.

The weight m of the battery cell 20 refers to the weight m of a single battery cell 20. When the battery pack 100 includes a plurality of battery cells 20, the weight of the battery cell 20 is the weight of the various battery cells 20.

Specifically, a ratio of the minimum wall thickness h of the bottom cover 12 to the weight m of the battery cell 20 may optionally be 0.04 mm/Kg, 0.05 mm/Kg, 0.1 mm/Kg, 0.4 mm/Kg, 0.8 mm/Kg, 1 mm/Kg, 1.5 mm/Kg, 2 mm/Kg, 2.5 mm/Kg, 3 mm/Kg, 3.5 mm/Kg, 4 mm/Kg, 5 mm/Kg, 6 mm/Kg, 8 mm/Kg, 10 mm/Kg, 12 mm/Kg, 13 mm/Kg, 15 mm/Kg, 16 mm/Kg, 18 mm/Kg, 20 mm/Kg, 30 mm/Kg, 35 mm/Kg, 40 mm/Kg, 45 mm/Kg, 50 mm/Kg, 55 mm/Kg, 60 mm/Kg, 65 mm/Kg, 68 mm/Kg, 70 mm/Kg, 75 mm/Kg, 80 mm/Kg, 85 mm/Kg, 90 mm/Kg, 95 mm/Kg, and 98 mm/Kg.

**Table 1 Impact of the ratio of the minimum wall thickness h of the bottom cover 12 to the weight m of the battery cell 20 on the safety performance of the battery pack 100**

| No. | h(mm) | m(Kg) | h/m( mm/Kg) | [Test result] |
|---|---|---|---|---|
| 1 | 0.2 | 10 | 0.02 | Fire, explosion |
| 2 | 0.5 | 10 | 0.05 | No fire, no explosion |
| 3 | 1.2 | 3 | 0.4 | No fire, no explosion |
| 4 | 3 | 1 | 3 | No fire, no explosion |
| 5 | 5 | 1.5 | 3.33 | No fire, no explosion |
| 6 | 8 | 1.8 | 4.45 | No fire, no explosion |
| 7 | 10 | 2 | 5 | No fire, no explosion |
| 8 | 12 | 1.6 | 7.5 | No fire, no explosion |
| 9 | 15 | 1.7 | 8.82 | No fire, no explosion |
| 10 | 20 | 2 | 10 | No fire, no explosion |
| 11 | 20 | 1 | 20 | No fire, no explosion |
| 12 | 20 | 0.5 | 40 | No fire, no explosion |
| 13 | 20 | 0.32 | 62.5 | No fire, no explosion |
| 14 | 20 | 0.25 | 80 | No fire, no explosion |
| 15 | 20 | 0.2 | 100 | No fire, no explosion |

Table 1 provides the test results of impacts of several ratios of the minimum wall thickness h of the bottom cover 12 to the weight m of the battery cell 20 on the safety performance of the battery pack 100 when tests are performed according to the standard GB 38031-2020 "Safety Requirements for Power Batteries for Electric Vehicles." As can be seen from Table 1, when h/m is equal to 0.02 mm/Kg, the battery pack 100 is prone to fire and explosion. The reason for this is that the structural strength of the battery pack 100 cannot meet the requirement. When h/M is greater than 0.02 mm/Kg, the structural strength of the bottom cover 12 is good, and the battery pack 100 is less prone to fire and explosion. However, excessively large h/m may easily cause space waste and low energy density. Therefore, h/m is preferably not greater than 100 mm/Kg.

At this point, it has been proven that when the minimum thickness h of the bottom cover 12 and the weight m of the battery cell 20 meet 0.03 mm/Kg≤h/m≤100 mm/Kg, the battery pack 100 not only has a good structural strength, but also has a high energy density and is not prone to fire and explosion.

In some embodiments, referring to Fig. 5 to Fig. 7 together, the bottom cover 12 has a cover portion 12a and a mounting portion 12b, the mounting portion 12b encloses and is connected to an edge of the cover portion 12a, the cover portion 12a is used for defining the accommodating cavity s, and the mounting portion 12b is connected to the main body 11.

The cover portion 12a is used for defining the accommodating cavity s, which refers to that the cover portion 12a and the main body 11 jointly enclose to form the accommodating cavity s. The mounting portion 12b is connected to the main body 11 and does not participate in the definition of the accommodating cavity s. The cover portion 12a may be a plate shaped component, a block shaped component, or a flat or curved plate shaped component, which is not specifically limited. As can be seen from Fig. 6, the mounting portion 12b encloses the edge of the cover portion 12a, which refers to that the mounting portion 12b is continuously arranged along the edge of the cover portion 12a to assume a structure with a closed end-to-end connection. It is understandable that for a projection in the vertical direction, the mounting portion 12b has a certain width, so as to have an appropriate contact area with the main body 11. This not only facilitates the positioning and mounting of the mounting portion 12b and the main body 11, but also facilitates the arrangement of the sealing member, and also helps improve the sealing performance between the mounting portion 12b and the main body 11.

The cover portion 12a and the mounting portion 12b may be integrally formed. When the bottom cover 12 is made of a metal material (such as aluminum, iron, and stainless steel), the cover portion 12a and the mounting portion 12b may be integrally formed by die-casting, forging, hot pressing, cold pressing, and other methods. When the bottom cover 12 is made of a plastic material (such as PP, PE, and ABS), the cover portion 12a and the mounting portion 12b may be integrally formed by injection molding. The cover portion 12a and the mounting portion 12b may also be separately formed and connected together. When the cover portion 12a and the mounting portion 12b are made of metal materials, the cover portion 12a and the mounting portion 12b may be welded and bonded together. When the cover portion 12a and the mounting portion 12b are made of plastic materials, the cover portion 12a and the mounting portion 12b may be bonded together. Of course, the cover portion 12a and the mounting portion 12b may also be fixedly connected together through other methods such as snap-fit and riveting.

The cover portion 12a and the mounting portion 12b may be located in the same plane. Specifically, optionally, two surfaces of the cover portion 12a and the mounting portion 12b both facing the main body 11 are located in the same plane, and/or two surfaces of the cover portion 12a and the mounting portion 12b both backing the main body 11 are located in the same plane. When the two surfaces both facing the main body 11 and the two surfaces both backing the main body 11 of the cover portion 12a and the mounting portion 12b are located in the same plane respectively, the cover portion 12a and the mounting portion 12b may form a flat plate shaped bottom cover 12 (as shown in Fig. 8).

The cover portion 12a and the mounting portion 12b may also not be located in the same plane. Specifically, the cover portion 12a is recessed towards the main body 11 with respect to the mounting portion 12b, or the cover portion 12a protrudes backing the main body 11 with respect to the mounting portion 12b, which is not specifically limited. The cover portion 12a and the mounting portion 12b may have equal or unequal thicknesses, which is not specifically limited.

At this point, the bottom cover 12 defines the accommodating cavity s by the cover portion 12a, and implements connection to the main body 11 by the mounting portion 12b, so that the structure is clear and convenient for mounting.

It is understandable that when the bottom cover 12 is sealed with and connected to the main body 11, the bottom cover 12 is sealed with and connected to the main body 11 through the mounting portion 12b, that is, the mounting portion 12b is sealed with and connected to the main body 11. The sealing and connecting method between the mounting portion 12b and the main body 11 may be sealing and connecting by a sealing member, sealing, and connecting by a sealant, and the like, which is not exhaustive specifically. The sealing member may be the sealing member mentioned in the above description, and the arranging method of the sealing member may be obtained with reference to the above records, with a difference that the sealing member is arranged between the mounting portion 12b and the main body 11. When the mounting portion 12b is sealed with and connected to the main body 11 by a sealant, the sealant may be applied to all surfaces of the mounting portion 12b that contact with the main body 11.

It is understandable that when the bottom cover 12 is detachably connected to the main body 11, the bottom cover 12 is detachably connected to the main body 11 through the mounting portion 12b, that is, the mounting portion 12b is detachably connected to the main body 11. The detachable connection method between the mounting portion 12b and the main body 11 may be obtained with reference to the detachable connection method between the bottom cover 12 and the main body 11 recorded in the above description, and it is only necessary to arrange the part in the bottom cover 12 that is detachably connected to the main body 11 as the mounting portion 12b. Therefore, the detachable connection method between the mounting portion 12b and the main body 11 will not be elaborated here.

In some embodiments, the mounting portion 12b is detachably connected to the main body 11.

Specifically, the bottom cover 12 further includes a fixing hole 12c arranged in the mounting portion 12b, and the fastener 13 is fastened to the main body 11 after passing through the fixing hole 12c in the mounting portion 12b. The fixing hole 12c is a through hole that runs through the mounting portion 12b in the vertical direction. Specifically, the fixing hole 12c may be a smooth through hole (such as when the fastener 13 is a rivet), a threaded through hole (such as when the fastener 13 is a screw), or other through holes (such as a hexagonal hole, a square hole, and a kidney shaped hole). The specific form of the fixing hole 12c depends on the specific form and specific setting method of the fastener 13, which will not be elaborated here.

In some embodiments, the cover portion 12a and the mounting portion 12b have equal thicknesses.

When the cover portion 12a and the mounting portion 12b are integrally formed, the two may be integrally formed by using the methods described above, for example, integrally formed by die-casting, integrally formed by cold pressing, integrally formed by hot pressing, integrally formed by injection molding, and the like, which will not be elaborated here. The cover portion 12a and the mounting portion 12b have equal thicknesses, and therefore, they may be quickly processed by stamping, cutting, and other methods based on the same metal plate during forming.

At this point, the cover portion 12a and the mounting portion 12b have equal thicknesses, stresses are equal at all positions during forming, and therefore, the forming rate of the integral forming may be improved, and they may also be quickly processed by using a simple method such as sheet cutting. The structure of the bottom cover 12 is simpler and the processing is more convenient.

In some embodiments, referring to Fig. 7, the cover portion 12a is arranged to protrude in a direction away from the accommodating cavity s with respect to the mounting portion 12b.

As can be known from the above, the cover portion 12a defines the accommodating cavity s, and the protruding of the cover portion 12a away from the accommodating cavity s refers to protruding of the cover portion 12a away from the main body 11. In other words, the cover portion 12a and the mounting portion 12b are arranged in a staggered manner in the vertical direction, and the cover portion 12a is located at the lowest position of the bottom cover 12.

When the cover portion 12a protrudes away from the accommodating cavity s with respect to the mounting portion 12b, a certain redundant space may be formed between the cover portion 12a and the mounting portion 12b, and the redundant space is capable of increasing the distance between the cover portion 12a and the battery cell 20. When an external force is applied to the cover portion 12a, the redundant space is capable of eliminating the external force, thereby reducing, or avoiding the external force from acting on the battery cell 20 to damage the battery cell 20. Especially when the battery pack 100 is mounted at the bottom of the vehicle 1000 and the bottom cover 12 is located at the lowest position of the battery pack 100, stones and other objects on the ground may easily fly to the bottom of the battery pack 100, that is, the bottom cover 12, in the driving process of the vehicle 1000, and hit the bottom cover 12. At this point, the redundant space can reduce the impact of external forces on the battery cell 20. At the same time, the cover portion 12a protrudes with respect to the mounting portion 12b, and the cover portion 12a of the bottom cover 12 may serve as a reinforcing structure for the bottom cover 12, thereby improving the bending performance of the bottom cover 12.

It is understandable that in the embodiments of the present application, the bottom cover 12 is located at the bottom of the box body 10 and is used for defining the accommodating cavity s.

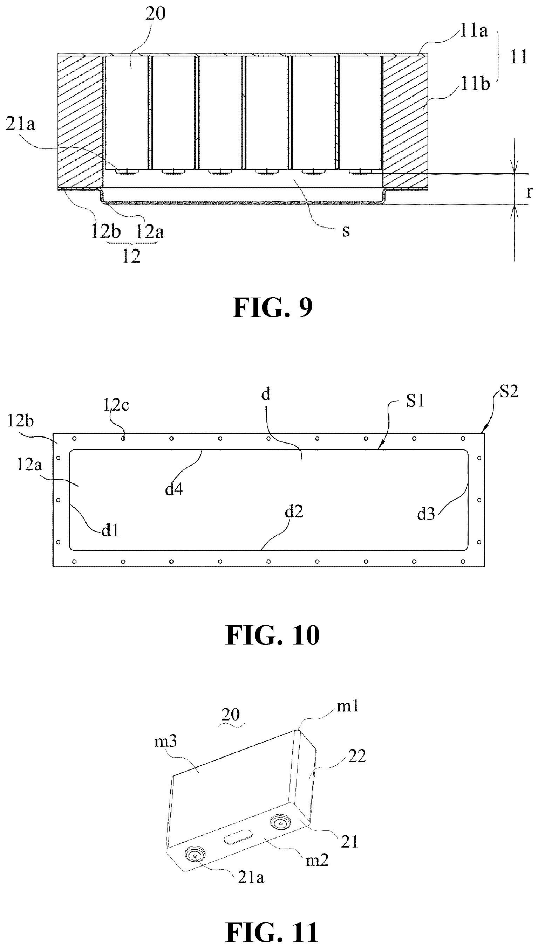

Fig. 9 is a sectional view of the battery pack 100 shown in Fig. 4. In some embodiments, referring to Fig. 9, the bottom cover 12 is arranged at an interval from the battery cell 20.

The arrangement of the bottom cover 12 and the battery cell 20 at an interval refers to maintaining a set interval r between the bottom cover 12 and the battery cell 20 in the vertical direction. Under the action of the set interval r, a buffer space is formed between the bottom cover 12 and the battery cell 20, which can avoid an external force acting on the bottom cover 12 from being transmitted to the battery cell 20 to damage the battery cell 20. Especially when the battery pack 100 is mounted at the bottom of the vehicle 1000 and the bottom cover 12 is at the lowest position of the battery pack 100, stones and other objects on the ground can easily fly to the bottom of the battery pack 100 and hit the bottom cover 12 in the driving process of the vehicle 1000. At this point, the buffer space can interrupt the transmission of external forces to the battery cell 20 and avoid an impact on the battery cell 20.

The arrangement of the bottom cover 12 and the battery cell 20 at an interval may be formed by the redundant space formed between the protruding cover portion 12a and the mounting portion 12b in the above embodiment, or by maintaining a set distance between one end of the battery cell 20 located in the main body 11 and facing the bottom cover 12 and one end of the main body 11 facing the bottom cover 12. In other words, the battery cell 20 is only located in a partial range of the accommodating cavity s defined by the main body 11, instead of being located in the range of the accommodating cavity s defined by the bottom cover 12, thereby ensuring that the set interval r is maintained between the battery cell 20 and the bottom cover 12 to form the buffer space.

It is understandable that when the battery pack 100 includes a plurality of battery cells 20, all the battery cells 20 are arranged at an interval from the bottom cover 12. Furthermore, in order to unify sizes of the battery cells 20, the interval distances between the various battery cells 20 and the bottom cover 12 are equal.

In some embodiments, referring to Fig. 5 and Fig. 6, the bottom cover 12 has a feature surface d facing the accommodating cavity s, and the feature surface d is constructed as a plane.

The feature surface d facing the accommodating cavity s indicates that the feature surface d is an inner surface in the bottom cover 12 that is capable of defining the accommodating cavity s. The feature surface d is constructed as a plane, which refers to that in an arrangement direction of the main body 11 and the bottom cover 12, the feature surface d is a plane perpendicular to the arrangement direction. In practical situations, when the main body 11 and the bottom cover 12 are arranged in a vertical direction, the feature surface d of the bottom cover 12 is a plane parallel to a horizontal plane. When the main body 11 and the bottom cover 12 are arranged in a horizontal direction, the feature surface d of the bottom cover 12 is a plane parallel to a vertical plane.

When the feature surface d is a plane, the feature surface d may keep relatively equal distances (this distance may be zero) from the various battery cells 20 accommodated in the accommodating cavity s. When the distances between the feature surface d and the battery cells 20 are kept relatively equal, the accommodating cavity s is capable of accommodating more battery cells 20. In other words, the space utilization rate of the accommodating cavity s is higher, the battery pack 100 is capable of having a higher energy density, and the battery pack 100 has a higher range.

It is understandable that when the bottom cover 12 has the cover portion 12a and the mounting portion 12b, the feature surface d may be constructed and formed by an inner surface of the cover portion 12a facing the accommodating cavity s. It is further understandable that when the bottom cover 12 is arranged at an interval from the battery cell 20, the feature surface d is arranged at an interval from the battery cell 20.

In some embodiments, an outer surface of the cover portion 12a away from the accommodating cavity s is parallel to the feature surface d.

The outer surface of the cover portion 12a away from the accommodating cavity s is arranged opposite to the feature surface d in the vertical direction. The outer surface of the cover portion 12a is used for contacting with the atmospheric environment and withstanding external forces. In a case that the outer surface of the cover portion 12a is a plane flush with the feature surface d, especially when the bottom cover 12 and the main body 11 are arranged in the vertical direction at the bottom of the vehicle 1000, and the bottom cover 12 is located at the lowest position of the battery pack 100, the outer surface of the cover portion 12a being a plane can greatly reduce the wind resistance generated by the battery pack 100, help reduce the driving resistance of the vehicle 1000, reduce the driving energy consumption of the vehicle 1000, and improve the range of the battery pack 100.

Fig. 10 is a schematic view of an orthographic projection of the bottom cover 12 shown in Fig. 6 in a vertical direction. S1 represents a projection area of the feature surface d, and S2 represents a projection area of the bottom cover 12.

In some embodiments, in a vertical direction, an area S1 of an orthographic projection of the feature surface d and an area S2 of an orthographic projection of the bottom cover 12 meet: S1/S2≥0.2. Further, S1/S2≥0.5.

In the embodiment shown in Fig. 10, for the orthographic projection in the vertical direction, the feature surface d is formed by a first feature edge d1, a second feature edge d2, a third feature edge d3, and a fourth feature edge d4 enclosing end to end. The area S1 of the orthographic projection of the feature surface d is the area of a region defined by the first feature edge d1, the second feature edge d2, the third feature edge d3, and the fourth feature edge d4. The area S2 of the orthographic projection of the bottom cover 12 is the area of a region defined by edges of the bottom cover 12.

Specifically, a ratio of the area S1 of the orthographic projection of the feature surface d to the area S2 of the orthographic projection of the bottom cover 12 may be 0.3, 0.4, 0.5, 0.6, 0.7, 0.8, 0.9, and 1.

**Table 2 Impact of the ratio of the area S1 to the area S2 on the range of the battery pack 100**

| No. | S1/ mm² | S2/ mm² | S1/S2 | [Test result] |
|---|---|---|---|---|
| 1 | 0.3×10⁶ | 2.6×10⁶ | 0.115 | Poor |
| 2 | 0.52×10⁶ | 2.6×10⁶ | 0.2 | Fair |
| 3 | 0.94×10⁶ | 2.6×10⁶ | 0.362 | Fair |
| 4 | 1.3×10⁶ | 2.6×10⁶ | 0.5 | Good |
| 5 | 1.5×10⁶ | 2.6×10⁶ | 0.577 | Good |
| 6 | 1.8×10⁶ | 2.6×10⁶ | 0.692 | Good |
| 7 | 2.2×10⁶ | 2.6×10⁶ | 0.846 | Excellent |
| 8 | 2.4×10⁶ | 2.6×10⁶ | 0.923 | Excellent |
| 9 | 2.6×10⁶ | 2.6×10⁶ | 1 | Excellent |

Table 2 shows the impacts of several ratios of the area S1 of the orthographic projection of the feature surface d to the area S2 of the orthographic projection of the bottom cover 12 on the range of the battery pack 100 when tests are performed according to the NEDC (New European Driving Cycle) standard. When S1/S2 is less than 0.2, the battery pack 100 has a poor range. The reason is that when the feature surface d is small, the space utilization rate of the accommodating cavity s is low, the quantity of battery cells 20 accommodated in the battery pack 100 is relatively small, and the energy density of the battery pack 100 is relatively low, resulting in a shorter range of the battery pack 100 and a poor test result. When the ratio of S1/S2 reaches 0.2 and above (especially when S1/S2 reaches 0.5 and above), as the ratio increases, the range of the battery pack 100 becomes better. The reason is that a larger feature surface d results in a higher space utilization rate of the accommodating cavity s, and a higher energy density of the battery pack 100. Therefore, the range of the battery pack 100 becomes increasingly higher and the test result becomes increasingly better.

The feature surface d is a plane, and therefore, the larger the area occupied by the feature surface d in the bottom cover 12, the smaller the area of an inner surface recessed or protruding with respect to feature surface d in the bottom cover 12. The inner surface recessed with respect to the feature surface d will cause a part of the space in the accommodating cavity s irregular and be unable to mount the battery cell 20, resulting in a low space utilization rate of the accommodating cavity s. The part of the space in the accommodating cavity s formed by the inner surface protruding with respect to the feature surface d is also irregular and cannot accommodate the battery cell 20, resulting in low space utilization rate of the accommodating cavity s. When the space utilization rate of the accommodating cavity s is low, the volume of the battery cell 20 per unit space in the battery pack 100 is small, and the energy density of the battery pack 100 is low. Therefore, the larger the area of the bottom cover 12 occupied by the feature surface d, the greater the space utilization rate of the battery pack 100, the higher the energy density of the battery pack 100, and the better the range of the battery pack 100.

In some embodiments, referring to Fig. 10, the orthographic projection of the feature surface d is rectangular in the vertical direction.

As shown in Fig. 10, the rectangular feature surface d is a region enclosed and defined by the first feature edge d1, the second feature edge d2, the third feature edge d3, and the fourth feature edge d4. In the battery pack 100, the plurality of battery cells 20 are mostly assembled into a rectangular structure, and the feature surface d is constructed in a rectangular shape, which is capable of being adapted to the overall structure formed by the battery cells 20 inside the battery pack 100. This helps arrange more battery cells 20 in the accommodating cavity s and improve the energy density of the battery pack 100.

Of course, in other embodiments, in the vertical direction, the orthographic projection of the feature surface d may also be in other shapes, for example, circle, polygon, ellipse, and other irregular shapes.

In the embodiment of the present application, the main body 11 includes a carrier 11a.

The carrier 11a may be a component located in the main body 11 and used for defining the accommodating cavity s (for example, the carrier 11a is the top cover or frame mentioned above), or a component not used for defining the accommodating cavity s but located in the accommodating cavity s (for example, the carrier 11a is the supporting plate mentioned above), which is not specifically limited. When the carrier 11a is used for defining the accommodating cavity s, the carrier 11a may be a component (such as the frame mentioned above) directly connected to the bottom cover 12 in the main body 11, or a component (such as the top cover mentioned above) not connected to the bottom cover 12.

In some embodiments, the battery cell 20 is arranged on a surface of the carrier 11a.

At this point, the carrier 11a is a component capable of carrying the weight of the battery cell 20, and may be a carrying plate, a carrying rod, a carrying block, a carrying sheet, a carrying frame, a carrying rope, and the like, which is not specifically limited. Specifically, the battery cell 20 may be supported on the carrier 11a, and at this point, the battery cell 20 may be arranged above the carrier 11a. Specifically, the battery cell 20 may further be hung on the carrier 11a, and at this point, the battery cell 20 may be hung on a wall surface of the carrier 11a parallel to a gravity direction of the battery cell 20.

The battery cell 20 may be arranged above the carrier 11a (such as when the carrier 11a is used as a supporting plate located in the accommodating cavity s), the battery cell 20 may be arranged below the carrier 11a (such as when the carrier 11a is used as a top cover for defining the accommodating cavity s), or the battery cell 20 may be arranged on the side of the carrier 11a (such as when the carrier 11a is used as a frame for defining the accommodating cavity s).

In some embodiments, the battery cell 20 is bonded to the carrier 11a.

Specifically, the bonding between the battery cell 20 and the carrier 11a may be achieved by using an adhesive such as an epoxy resin adhesive and an acrylic ester adhesive, which is not specifically limited. At this point, the bonding between the battery cell 20 and the carrier 11a not only facilitates the connection, but also simplifies the structure of the battery pack 100.

In some embodiments, the battery cell 20 is arranged on the surface of the carrier 11a, and the minimum thickness H of the carrier 11a and the weight M of the battery pack 100 meet: 0.0002 mm/kg<H/M<0.2 mm/kg.

The thickness of the carrier 11a refers to a distance between a surface of one side used for arranging the battery cell 20 in the carrier 11a and a surface of the other side backing it. When the battery cell 20 is arranged on a surface of the carrier 11a in the vertical direction, the minimum thickness H of the carrier 11a refers to the thickness of a position where a distance between surfaces at two sides of the carrier 11a in the vertical direction is the smallest. When the battery cell 20 is arranged on a surface of the carrier 11a in the horizontal direction, the thickness of the carrier 11a refers to the thickness of a position where a distance between surfaces at two sides of the carrier 11a in the horizontal direction is the smallest.

The weight of the battery pack 100 includes the entire weight of the main body 11, the bottom cover 12, the battery cell 20, and other composition structures (such as a wiring harness, a thermal management system, and a power management system).

Specifically, a ratio of the minimum thickness H of the carrier 11a to the weight M of the battery pack 100 may be designed as: 0.0003 mm/kg, 0.0005 mm/kg, 0.0008 mm/kg, 0.001 mm/kg, 0.003 mm/kg, 0.005 mm/kg, 0.008 mm/kg, 0.01 mm/kg, 0.03 mm/kg, 0.05 mm/kg, 0.06 mm/kg, 0.08 mm/kg, 0.1 mm/kg, 0.12 mm/kg, 0.15 mm/kg, 0.16 mm/kg, 0.19 mm/kg, and 0.02 mm/kg.

**Table 3 Impact of the ratio of the minimum thickness H of the carrier 11a to the weight M of the battery pack 100 on the safety performance of the battery pack 100**

| No. | H(mm) | M(Kg) | H/M(mm/Kg) | [Test result] |
|---|---|---|---|---|
| 1 | 0.1 | 1000 | 0.0001 | Fire, explosion |
| 2 | 0.2 | 1000 | 0.0002 | Fire, explosion |
| 3 | 0.6 | 600 | 0.001 | No fire, no explosion |
| 4 | 1.5 | 500 | 0.003 | No fire, no explosion |
| 5 | 2.5 | 500 | 0.005 | No fire, no explosion |
| 6 | 4 | 500 | 0.008 | No fire, no explosion |
| 7 | 3 | 300 | 0.01 | No fire, no explosion |
| 8 | 9 | 300 | 0.03 | No fire, no explosion |
| 9 | 10 | 200 | 0.05 | No fire, no explosion |
| 10 | 12 | 200 | 0.06 | No fire, no explosion |
| 11 | 16 | 200 | 0.08 | No fire, no explosion |
| 12 | 20 | 200 | 0.1 | No fire, no explosion |
| 13 | 30 | 200 | 0.15 | No fire, no explosion |
| 14 | 40 | 200 | 0.02 | No fire, no explosion |

Table 3 provides results of impacts of several ratios of the minimum thickness H of the carrier 11a to the weight M of the battery pack 100 on the safety performance of the battery pack 100 when tests are performed according to the standard GB 38031-2020 "Safety Requirements for Power Batteries for Electric Vehicles." As can be seen from Table 3, when the ratio of H/M does not exceed 0.0002 mm/kg, the battery pack 100 will be on fire and explode. The reason is that the structural strength of the battery pack 100 does not meet requirements. When the ratio of H/M exceeds 0.0002 mm/kg, the battery pack 100 will not be on fire or explode. However, when the ratio of H/M is too large (for example, exceeding 0.1), due to the small weight of the battery pack 100 and the large thickness of the carrying plate, the proportion of the battery cell 20 in the unit volume of the battery pack 100 is relatively low, the space utilization rate is low, the energy density of the battery pack 100 is too low, and the use cost of the battery pack 100 is relatively high. Furthermore, when 0.0005 mm/kg≤H/M≤0.1 mm/kg, the structural strength of the battery pack 100 meets the requirement and the energy density of battery pack 100 is high. The battery pack 100 has a stronger range and will not cause safety accidents such as fire and explosion.

In some embodiments, the minimum thickness H of the carrier 11a meets: 0.2 mm<H<20 mm.

Specifically, the minimum thickness H of the carrier 11a may be 0.3 mm, 0.5 mm, 0.8 mm, 0.9 mm, 1.0 mm, 1.2 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 9 mm, 10 mm, 12 mm, 15 mm, 16 mm, 18 mm, and 19 mm. Furthermore, when 0.5 mm≤H≤10 mm, the carrier 11a has a good structural strength, and the overall strength of the battery pack 100 is good. The battery pack 100 is less prone to fire and explosion. At the same time, the carrier 11a occupies a smaller overall volume of the battery pack 100, and the space utilization rate of the battery pack 100 is higher, resulting in a higher energy density of the battery pack 100.

In some embodiments, referring to Fig. 3 and Fig. 4, the battery cell 20 is suspended from the carrier 11a.

The battery cell 20 is suspended from the carrier 11a, which refers to that the battery cell 20 is arranged below the carrier 11a in the vertical direction, and the weight of the battery cell 20 is borne by the carrier 11a. Suspending the battery cell 20 from the carrier 11a includes the following methods: the battery cell 20 is directly bonded to a lower surface of the carrier 11a, the battery cell 20 is connected to the carrier 11a through the fastener 13 and is located below the carrier 11a, and the battery cell 20 is hung on the carrier 11a through a hook and the like and is located below the carrier 11a.

At this point, the battery cell 20 is suspended below the carrier 11a, and the bottom cover 12 is located at the bottom of the box body 10. During repairing of the interior of the battery pack 100, disassembling the bottom cover 12 can expose the battery cell 20 without the need to disassemble the carrier 11a, so that the maintenance of the battery pack 100 is more convenient. At the same time, during repairing of the battery pack 100, the battery cell 20 may be disassembled and assembled from below the carrier 11a. Especially when the carrier 11a, as at least a part of the chassis of the vehicle 1000, is subjected to forces, the battery cell 20 only needs to be disassembled and assembled from below the carrier 11a without the need to remove the carrier 11a, which facilitates the maintenance of the battery pack 100.

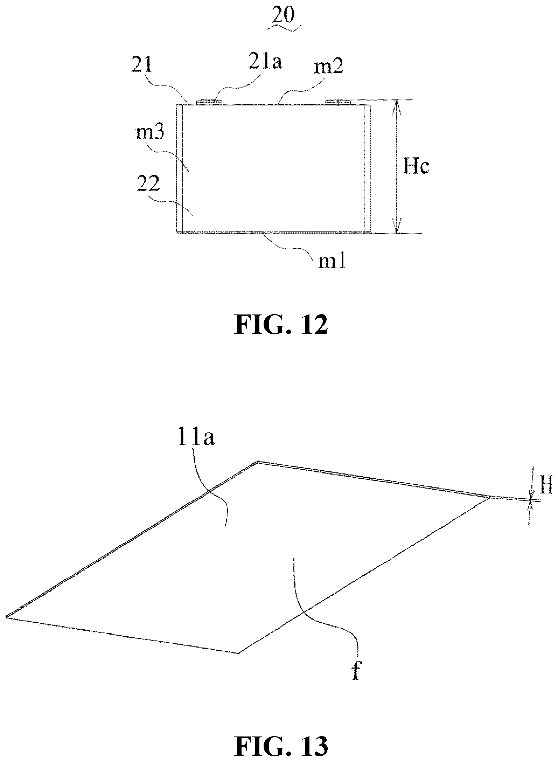

Fig. 11 is a schematic profile view of a battery cell 20 according to some embodiments of the present application. Fig. 12 is a front view of the battery cell 20 shown in Fig. 11.

In some embodiments, referring to Fig. 4 and Fig. 11, an outer surface of the battery cell 20 facing the carrier 11a is a first outer surface m1, the battery cell 20 includes electrode terminals 21a, and the electrode terminals 21a are arranged on an outer surface of the battery cell 20 other than the first outer surface m1.

As described above, the electrode terminal 21a is a component used for being electrically connected to the electrode assembly 23 in the battery cell 20, for outputting or inputting electric energy of the battery cell 20. The electrode terminal 21a extends at least partially beyond the battery cell 20 to be electrically connected to the outside. The series connection and parallel connection between the battery cells 20 are achieved through the series connection and parallel connection between their respective electrode terminals 21a. The electrode terminal 21a has conductivity to achieve electrical transmission, and may be an aluminum electrode, a copper electrode, and the like.

The electrode terminal 21a is arranged on the outer surface of the battery cell 20 other than the first outer surface m1. The first outer surface m1 faces the carrier 11a, and is usually a smooth surface without any structures such as the electrode terminals 21a and injection holes protruding from or recessed into it. When the battery cell 20 is suspended from the carrier 11a, the first outer surface m1 is the outer surface of the battery cell 20 facing upwards. In a specific embodiment, the battery cell 20 includes the case 22 and the end cover 21 mentioned above, and the case 22 and the end cover 21 form an internal environment of the battery cell 20 for accommodating the electrode assembly 23. The end cover 21 is located at one end of the case 22, and the electrode terminal 21a is arranged on the end cover 21. At this point, any outer surface of the case 22 may serve as the first outer surface m1 of the battery cell 20.

The electrode terminals 21a include a positive terminal and a negative terminal, the positive terminal is used for electrically connecting to a positive electrode plate in the electrode assembly 23, and the negative terminal is used for electrically connecting to a negative electrode plate in the electrode assembly 23. It should be noted that the positive terminal and the negative terminal may be arranged on the same outer surface of the battery cell 20 (such as a square battery cell 20), or they may be respectively arranged on two different outer surfaces of the battery cell 20 (such as a cylindrical battery cell 20). When the positive terminal and negative terminal are arranged on two different outer surfaces of the battery cell 20, the first outer surface m1 is a surface of the battery cell 20 that is different from the two outer surfaces.

In addition to the battery cells 20, the battery pack 100 is usually further provided with components that are electrically connected to the various battery cells 20, such as a sampling wiring harness, a high-voltage wiring harness, and a protective structure for the battery cells 20. At this point, the electrode terminal 21a is arranged on another surface of the battery cell 20 other than the first outer surface m1. When arranging components such as the sampling wiring harness, the high-voltage wiring harness, and the protective structure on the electrode terminal 21a, the various components will not limited by the carrier 11a, and may be arranged in the space between the battery cell 20 and other structures of the main body 11 other than the carrier 11a (such as the space between the battery cell and the bottom cover and/or the space between the battery cell and the inner side of the main body), which is more convenient for the arrangement of the various components. At the same time, due to the smooth surface of the first outer surface m1, the first outer surface m1 may be attached to the carrier 11a, which can achieve the attached mounting of the battery cell 20 and the carrier 11a, without the need to reserve a space between the battery cell 20 and the carrier 11a, which helps improve the space utilization rate of the battery pack 100.

In some embodiments, referring to Fig. 11 and Fig. 12 together, the battery cell 20 has a second outer surface m2 arranged opposite to the first outer surface m1, and the electrode terminals 21a are arranged on the second outer surface m2.

The second outer surface m2 is an outer surface of the battery cell 20 arranged opposite to the first outer surface m1. When the battery cell 20 is suspended from the carrier 11a, the second outer surface m2 is opposite to the bottom cover 12. As mentioned above, the battery cell 20 and the bottom cover 12 may be arranged at an interval. At this point, there is a buffer space between the second outer surface m2 and the bottom cover 12, and the part of the electrode terminal 21a that extends out of the battery cell 20 is located within the buffer space. Therefore, a wiring harness and a connecting sheet connected to the electrode terminal 21a may be arranged within the buffer space. At the same time, the buffer space is further capable of blocking the external force hitting the bottom cover 12 from affecting the battery cell 20 to damage the battery cell 20, as mentioned above. Therefore, the buffer space is not only capable of interrupting the impact of the external force, but also capable of allowing for the layout of wiring harnesses and the like, thereby achieving two goals with one stone. In addition, the space utilization rates of the buffer space and the battery pack 100 are also improved.

Of course, in other embodiments, referring to Fig. 11 and Fig. 12, the electrode terminal 21a may also be arranged on a third outer surface intersecting the first outer surface m1 in the battery cell 20.

In some embodiments of the present application, referring to Fig. 4, Fig. 5, and Fig. 9, the carrier 11a is located at the top of the box body 10 and is used for defining the accommodating cavity s. The bottom cover 12 is located at the bottom of the box body 10, and the carrier 11a is arranged opposite to the bottom cover 12. The carrier 11a serves as a structure at the top of the box body 10, and the box body 10 may be mounted to a mounting body through the carrier 11a. At this point, the battery cell 20 arranged on the carrier 11a is capable of improving the strength of the carrier 11a, thereby increasing the stiffness of the top of the battery pack 100. In this way, the application scenario of the battery pack 100 may be expanded to scenarios where the top is subjected to forces, for example, used as a part of the chassis of the vehicle 1000.

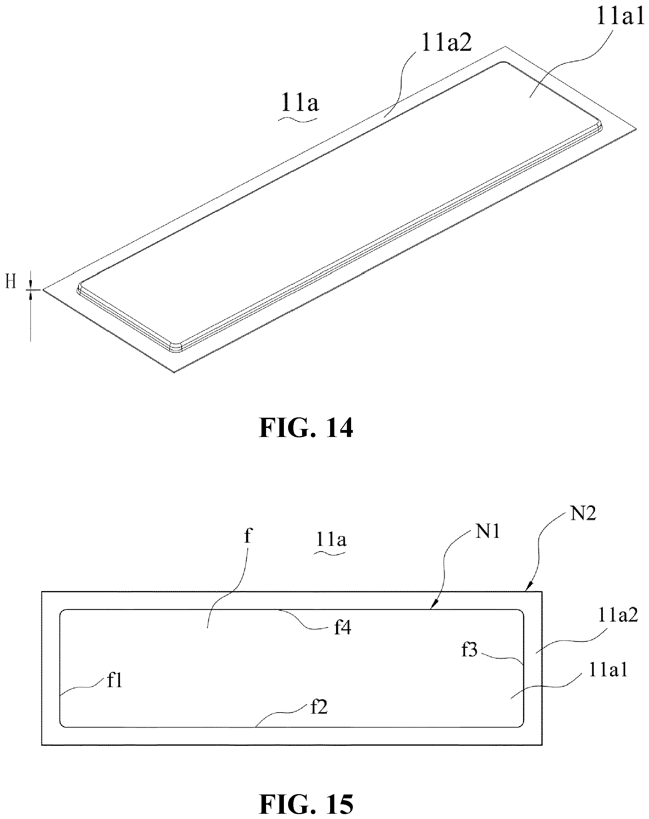

Fig. 13 is a schematic structural view of a carrier 11a according to some embodiments of the present application. Fig. 14 is a schematic structural view of a carrier 11a according to some other embodiments of the present application. Fig. 15 is a view of an orthographic projection of the carrier 11a shown in Fig. 14 in the vertical direction.

In some embodiments, the carrier 11a has a carrying surface f facing the accommodating cavity s, and the carrying surface f is constructed as a plane.

The carrying surface f is an inner surface of the carrier 11a facing the accommodating cavity s, and is used for defining the accommodating cavity s. The carrying surface f is constructed as a plane, which refers to that in an arrangement direction of the main body 11 and the bottom cover 12, the carrying surface f is a plane perpendicular to the arrangement direction. In practical situations, when the main body 11 and the bottom cover 12 are arranged in a vertical direction, the carrier 11a and the bottom cover 12 are arranged opposite to each other in the vertical direction, and the carrying surface f of the carrier 11a is a plane parallel to a horizontal plane. When the main body 11 and the bottom cover 12 are arranged in a horizontal direction, the carrier 11a and the bottom cover 12 are arranged opposite to each other in the horizontal direction, and the carrying surface f of the carrier 11a is a plane parallel to a vertical plane.

As shown in Fig. 13, the carrier 11a may be all of the inner surface of the carrier 11a facing the accommodating cavity s, and at this point, the carrier 11a may be in a flat plate shape. As shown in Fig. 14 and Fig. 15, the carrier 11a may also be a part of the inner surface of the carrier 11a facing the accommodating cavity s. At this point, the carrying surface f is only the part of the inner surface of the carrier 11a used for defining the accommodating cavity s.

When the carrying surface f is a plane, the carrying surface f may keep relatively equal distances (this distance may be zero) with the various battery cells 20 accommodated in the accommodating cavity s. When the distances between the carrying surface f and the battery cells 20 are kept relatively equal, the accommodating cavity s is capable of accommodating more battery cells 20. In other words, the space utilization rate of the accommodating cavity s is higher, the battery pack 100 is capable of having a higher energy density, and the battery pack 100 has a higher range.

In some embodiments, the battery cell 20 is arranged on the carrying surface f. The battery cell 20 is mounted on the carrier 11a through the carrying surface f. The battery cell 20 may be bonded to the carrying surface f, or fixedly connected to the carrying surface f through the fastener 13, or welded or snap-fitted to the carrying surface f, which is not specifically limited.

The carrying surface f is a plane, and therefore, the carrying surface f can have a large contact area with the battery cell 20 arranged on itself, so that mounting of the battery cell 20 is more stable. At the same time, when the carrying surface f is planar, compared with an uneven surface such as a curved surface, the carrying surface f is capable of being connected to a larger quantity of battery cells 20, which can increase the mounting quantity of the battery cells 20 inside the battery pack 100, thereby improving the space utilization and energy density of the battery pack 100.

It is understandable that, when the battery cell 20 is suspended from the carrier 11a, at this point, the battery cell 20 is suspended from the carrying surface f.

In some embodiments, in a vertical direction, an area N1 of an orthographic projection of the carrying surface f and an area N2 of an orthographic projection of the carrier 11a meet: N1/N2≥0.2. Further, N1/N2≥0.5.

In the embodiment shown in Fig. 15, for the orthographic projection in the vertical direction, the carrying surface f is formed by a first carrying edge f1, a second carrying edge f2, a third carrying edge f3, and a fourth carrying edge f4 enclosing end to end. The area N1 of the orthographic projection of the carrying surface f is the area of a region defined by the first carrying edge f1, the second carrying edge f2, the third carrying edge f3, and the fourth carrying edge f4. The area N2 of the orthographic projection of the carrier 11a is the area of a region defined by edges of the carrier 11a.

Specifically, a ratio of the area N1 of the orthographic projection of the carrying surface f to the area N2 of the orthographic projection of the carrier 11a may be 0.2, 0.3, 0.4, 0.5, 0.6, 0.7, 0.8, 0.9, and 1.

**Table 4 Impact of the ratio of the area N1 to the area N2 on the range of the battery pack 100**

| No. | N1(mm²) | N2(mm²) | N1/N2 | [Test result] |
|---|---|---|---|---|
| 1 | 1.8×10⁵ | 2.16×10⁶ | 0.083 | Poor |
| 2 | 2.16×10⁵ | 2.16×10⁶ | 0.1 | Poor |
| 3 | 4.32×10⁵ | 2.16×10⁶ | 0.2 | Fair |
| 4 | 8×10⁵ | 2.16×10⁶ | 0.37 | Fair |
| 5 | 1.2×10⁶ | 2.16×10⁶ | 0.56 | Good |
| 6 | 1.7×10⁶ | 2.16×10⁶ | 0.787 | Excellent |
| 7 | 2.16×10⁶ | 2.16×10⁶ | 1 | Best |

Table 4 shows the impacts of several ratios of the area N1 of the orthographic projection of the carrying surface f to the area N2 of the orthographic projection of the carrier 11a on the range of the battery pack 100 when tests are performed according to the NEDC (New European Driving Cycle) standard. When N1/N2 is less than 0.2, the battery pack 100 has a poor range. The reason is that when the carrying surface f is small, the quantity of battery cells 20 carried on the carrier 11a is small, the space utilization rate of the accommodating cavity s is low, and the energy density of the battery pack 100 is relatively low, resulting in a shorter range of the battery pack 100 and a poor test result. When the ratio of N1/N2 reaches 0.2 and above (especially when N1/N2 reaches 0.5 and above), as the ratio increases, the range of the battery pack 100 becomes better. The reason is that a larger carrying surface f results in a larger quantity of battery cells 20 carried on the carrier 11a, a higher space utilization rate of the accommodating cavity s, and a higher energy density of the battery pack 100. Therefore, the range of the battery pack 100 becomes increasingly higher and the test structure becomes increasingly better. When the carrier 11a is a flat plate structure as shown in Fig. 13, the area N1 of the orthographic projection of the carrying surface f is equal to the area N2 of the orthographic projection of the carrier 11a, and the battery pack 100 has the best range.

In some embodiments, the orthographic projection of the carrying surface f is rectangular in the vertical direction.

As shown in Fig. 15, the rectangular carrying surface f is a region enclosed and defined by the first carrying edge f1, the second carrying edge f2, the third carrying edge f3, and the carrying feature edge f4. In the battery pack 100, the plurality of battery cells 20 are mostly assembled into a rectangular structure, and the carrying surface f is constructed in a rectangular shape, which is capable of being adapted to the overall structure formed by the battery. This helps arrange more battery cells 20 in the accommodating cavity s and improve the energy density of the battery pack 100.

Of course, in other embodiments, in the vertical direction, the orthographic projection of the carrying surface f may also be in other shapes, for example, circle, polygon, ellipse, and other irregular shapes.

In some embodiments, referring to Fig. 14, the carrier 11a has a carrying portion 11a1 and a connecting portion 11a2, the connecting portion 11a2 encloses and is connected to an edge of the carrying portion 11a1, the carrying portion 11a1 is used for defining the accommodating cavity s, and the connecting portion 11a2 is connected to a part of the box body 10 other than the carrier 11a.

The carrying portion 11a1 is used for defining the accommodating cavity s, and the connecting portion 11a2 is used for being connected the part of the box body 10 other than the carrier 11a, without participating in the definition of the accommodating cavity s. The carrying portion 11a1 may be a plate shaped component, a block shaped component, or a flat or curved plate shaped component, which is not specifically limited. As can be seen from Fig. 14, the connecting portion 11a2 encloses the edge of the carrying portion 11a1, which refers to that the connecting portion 11a2 is continuously arranged along the edge of the carrying portion 11a1 to assume a structure with a closed end-to-end connection. It is understandable that for the projection in the vertical direction, the connecting portion 11a2 has a certain width, so that it may have an appropriate contact area with other structures of the box body 10 other than the carrier 11a, and achieve mounting connection between the connecting portion 11a2 and other structures of the box body 10 other than the carrier 11a more conveniently.

The carrying portion 11a1 and the connecting portion 11a2 may be integrally formed. When the carrier 11a is made of a metal material (such as aluminum, iron, and stainless steel), the carrying portion 11a1 and the connecting portion 11a2 may be integrally formed by die-casting, forging, hot pressing, cold pressing, and other methods. When the carrier 11a is made of a plastic material (such as PP, PE, and ABS), the carrying portion 11a1 and the connecting portion 11a2 may be integrally formed by injection molding. The carrying portion 11a1 and the connecting portion 11a2 may also be separately formed and connected together. When the carrying portion 11a1 and the connecting portion 11a2 are made of metal materials, the carrying portion 11a1 and the connecting portion 11a2 may be welded and bonded together. When the carrying portion 11a1 and the connecting portion 11a2 are made of plastic materials, the cover portion 12a and the mounting portion 12b may be bonded together. Of course, the carrying portion 11a1 and the connecting portion 11a2 may also be fixedly connected together through other methods such as snap-fit and riveting.

Specifically, the connecting portion 11a2 is connected to the part of the main body 11 other than the carrier 11a, and the connecting method may be either integral forming or fixed connection. When the connecting portion 11a2 is integrally formed with the part of the main body 11 other than the carrier 11a, that is to say, the main body 11 is an integrally formed component, the integral forming may be performed through die-casting, forging, hot pressing, cold pressing, injection molding, and other methods. When the connecting portion 11a2 is fixedly connected to the part of the main body 11 other than the carrier 11a, the fixed connection may be performed through fastening connection with the fastener 13, snap-fit connection with a snap-fit structure, and other methods, which is not specifically limited.

The carrying portion 11a1 and the connecting portion 11a2 may be located in the same plane. Specifically, optionally, two surfaces of the carrying portion 11a1 and the connecting portion 11a2 both facing the bottom cover 12 are located in the same plane, and/or two surfaces of the carrying portion 11a1 and the connecting portion 11a2 both backing the bottom cover 12 are located in the same plane. When the two surfaces both facing the bottom cover 12 and the two surfaces both backing the bottom cover 12 of the carrying portion 11a1 and the connecting portion 11a2 are located in the same plane respectively, the carrying portion 11a1 and the connecting portion 11a2 may form a flat plate shaped carrier 11a (as shown in Fig. 13).

The carrying portion 11a1 and the connecting portion 11a2 may also not be located in the same plane. Specifically, the carrying portion 11a1 protrudes away from the accommodating cavity s with respect to the connecting portion 11a2, or the carrying portion 11a1 recesses towards the accommodating cavity s with respect to the connecting portion 11a2, which is not specifically limited. The carrying portion 11a1 and the connecting portion 11a2 may have equal or unequal thicknesses, which is not specifically limited.

At this point, the carrier 11a defines the accommodating cavity s by the carrying portion 11a1, and implements connection to a structure of the main body 11 other than the carrier 11a by the connecting portion 11a2, so that the structure is clear.

It is understandable that when the carrier 11a includes the carrying portion 11a1 and the connecting portion 11a2, the battery cell 20 is arranged on the carrying portion 11a1.

It is understandable that when the carrier 11a includes the carrying portion 11a1 and the connecting portion 11a2, an inner surface of the carrying portion 11a1 facing the accommodating cavity s is constructed to form the carrying surface f.

In some embodiments, the carrying portion 11a1 is arranged to protrude in a direction away from the accommodating cavity s with respect to the connecting portion 11a2.

As can be known from the above, the carrying portion 11a1 defines the accommodating cavity s, and the carrying portion 11a1 protruding away from the accommodating cavity s refers to the staggered arrangement of the carrying portion 11a1 and the connecting portion 11a2 in the vertical direction. The carrying portion 11a1 is located at the highest position of the carrier 11a. At this point, a certain space may be formed between the carrying portion 11a1 and the connecting portion 11a2 as a part of the accommodating cavity s, and the space can accommodate the battery cell 20.

When the carrying portion 11a1 protrudes away from the accommodating cavity s with respect to the connecting portion 11a2, the carrying portion 11a1 can serve as a reinforcing structure for the carrier 11a, thereby improving the bending performance of the carri er 11a.

In some embodiments, the carrying portion 11a1 and the connecting portion 11a2 have equal thicknesses.

When the carrying portion 11a1 and the connecting portion 11a2 have equal thicknesses, the carrying portion 11a1 and the connecting portion 11a2 may be formed integrally through die-casting, cold pressing, and hot pressing of the same plate, so that the forming of the carrier 11a is more convenient. At the same time, the carrying portion 11a1 and the connecting portion 11a2 have equal thicknesses, so that stresses at various positions are equal during forming, which can improve the forming rate of the carrier 11a.

In some embodiments, an outer surface of the carrying portion 11a1 away from the accommodating cavity s is parallel to the carrying surface f.

The outer surface of the carrying portion 11a1 away from the accommodating cavity s is arranged opposite to the carrying surface f in the vertical direction. The outer surface of the carrying portion 11a1 is capable of contacting with the atmospheric environment. When the battery pack 100 is mounted on a vehicle 1000, the carrying portion 11a1 with the planar outer surface is capable of reducing a driving resistance of the vehicle 1000, reducing the driving energy consumption of the vehicle 1000, lowering the energy consumption, and improving the range of the battery pack 100.

In some embodiments, referring to Fig. 3, Fig. 4, and Fig. 9, the main body 11 further includes a frame 11b and the carrier 11a. The frame 11b encloses to form a cavity q of which both ends in the vertical direction are run through. The bottom cover 12 and the carrier 11a respectively cover the opposite ends of the cavity q in the vertical direction, and the bottom cover 12, the frame 11b, and the carrier 11a jointly enclose to form the accommodating cavity s.

The frame 11b encloses itself to form the cavity q of which both ends in the vertical direction are run through, the carrier 11a covers the top of the cavity q, and the bottom cover 12 covers the bottom of the cavity q. That is, the carrier 11a is located at the top of the box body 10 and is used for defining the accommodating cavity s, and the bottom cover 12 is located at the bottom of the box body 10 and is used for defining the accommodating cavity s. The frame 11b, the carrier 11a, and the bottom cover 12 enclose to form the accommodating cavity s. The frame 11b, the carrier 11a, and the bottom cover 12 may be made of the same material, such as aluminum alloy, copper alloy, steel, and plastic. Of course, the frame 11b, the carrier 11a, and the bottom cover 12 may also be made of different materials, which is not specifically limited. For the orthographic projection in the vertical direction, the frame 11b may be rectangular, circular, polygonal, and the like, which is not specifically limited.

When the carrier 11a includes the carrying portion 11a1 and the connecting portion 11a2, the carrier 11a is connected to the frame 11b through the connecting portion 11a2. When the bottom cover 12 includes the cover portion 12a and the mounting portion 12b, the bottom cover 12 is connected to the frame 11b through the mounting portion 12b.

At this point, based on the frame 11b, the carrier 11a and bottom cover 12 are connected to two ends of the frame 11b in the vertical direction, the accommodating cavity s of the battery pack 100 can be formed, and the structure of the box body 10 is relatively simple.

In some embodiments, the carrier 11a is fixedly connected to or integrally formed with the frame 11b. The carrier 11a and the frame 11b may be integrally formed by injection molding, die-casting, forging, cold pressing, hot pressing, and other methods. The carrier 11a and the frame 11b may be fixedly connected through fastening connection with the fastener 13, snap-fit connection with a snap-fit structure, welding, bonding, hot melt connection, and the like.

When the carrier 11a and the frame 11b are integrally formed, the main body 11 is formed as a whole, and the main body 11 only needs to be connected to the bottom cover 12 to achieve assembling of the box body 10, so that the assembling of the box body 10 is convenient. When the carrier 11a is fixedly connected to the frame 11b, forming processes of the carrier 11a and the frame 11b are relatively easy, which can reduce the process cost of the box body 10.

It is understandable that, when the carrier 11a is provided with the carrying portion 11a1 and the connecting portion 11a2, it is connected to the frame 11b through the connecting portion 11a2. When the bottom cover 12 is provided with the cover portion 12a and the mounting portion 12b, it is connected to the frame 11b through the mounting portion 12b.

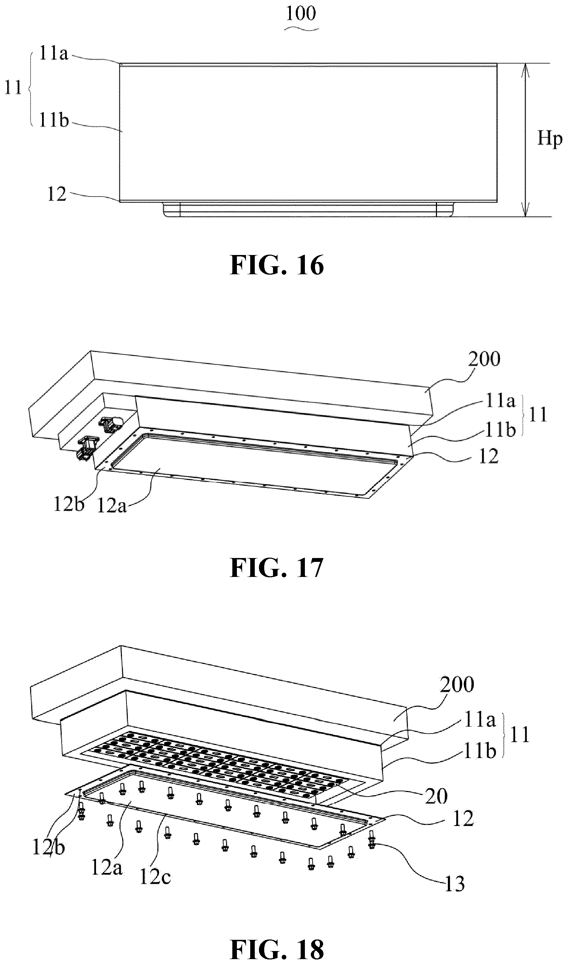

Fig. 16 is a front view of the battery pack 100 shown in Fig. 4. Referring to Fig. 16 and Fig. 12, in some embodiments, in the vertical direction, the height Hc of the battery cell 20 and the height Hp of the battery pack 100 meet: 0.02≤Hc/Hp≤0.98.

The height Hc of the battery cell 20 refers to the maximum length of the battery cell 20 in the vertical direction when the main body 11 and the bottom cover 12 are arranged in the vertical direction. Taking the battery cell 20 shown in Fig. 12 as an example, when the first outer surface m1 of the battery cell 20 is arranged opposite to the outer surface where the electrode terminal 21a is located, the maximum length of the battery cell 20 refers to a distance between the electrode terminal 21a and the first outer surface m1. Of course, when the first outer surface m1 of the battery cell 20 is adjacent to the outer surface where the electrode terminal 21a is located, the height Hc of the battery cell 20 refers to a distance between the first outer surface m1 of the battery cell 20 and the outer surface arranged opposite to it.

The height Hp of the battery pack 100 refers to the maximum length of the battery pack 100 in the vertical direction when the main body 11 and the bottom cover 12 are arranged in the vertical direction.

Specifically, a ratio of the height Hc of the battery cell 20 to the height Hp of the battery pack 100 may be 0.02, 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, and 0.98.

**Table 5 Impact of the ratio of the height Hc of the battery cell 20 to the height Hp of the battery pack 100 on the safety performance of the battery pack 100**

| No. | Hc/ mm | Hp/ mm | Hc/Hp | [Test result] |
|---|---|---|---|---|
| 1 | 248 | 252 | 0.984 | Fire, explosion |
| 2 | 138 | 150 | 0.92 | No fire, no explosion |
| 3 | 115 | 135 | 0.85 | No fire, no explosion |
| 4 | 90 | 120 | 0.75 | No fire, no explosion |
| 5 | 78 | 120 | 0.65 | No fire, no explosion |
| 6 | 110 | 200 | 0.55 | No fire, no explosion |
| 7 | 60 | 200 | 0.3 | No fire, no explosion |
| 8 | 60 | 600 | 0.1 | No fire, no explosion |
| 9 | 50 | 1000 | 0.05 | No fire, no explosion |

Table 5 provides impacts of several ratios of the height Hc of the battery cell 20 to the height Hp of the battery pack 100 on the safety performance of the battery pack 100 when tests are performed according to the standard GB 38031-2020 "Safety Requirements for Power Batteries for Electric Vehicles." As can be seen from Table 5, when Hc/Hp exceeds 0.98, the structure of the box body 10 occupies a small height of the battery pack 100, and the strength of the box body 10 cannot meet the requirement, leading to safety accidents such as fire and explosion. When 0.02≤Hc/Hp, the structural strength of the box body 10 is capable of meeting the requirement and there will be no fire or explosion. When Hc/Hp is less than 0.2, although the structural strength of the box body 10 is capable of meeting the requirement, the space utilization rate of battery pack 100 is low and the energy density is too low.

Furthermore, if 0.5≤Hc/Hp<0.94, not only the strength of the battery pack 100 meets the requirement and there will be no safety accidents such as fire and explosion, but also the space utilization rate of battery pack 100 is high, and the energy density of battery pack 100 is high.

According to some embodiments of the present application, the battery pack 100 includes the box body 10 and the battery cell 20, and the box body 10 encloses to form the accommodating cavity s. The box body 10 includes the carrier 11a located at the top and used for defining the accommodating cavity s. The battery cell 20 is accommodated in the accommodating cavity s. The carrier 11a has a carrying surface f facing the accommodating cavity s, and the carrying surface f is constructed as a plane. At this point, when the carrying surface f is a plane, the carrying surface f may keep relatively equal distances (this distance may be zero) with the various battery cells 20 accommodated in the accommodating cavity s. When the distances between the carrying surface f and the battery cells 20 are kept relatively equal, the accommodating cavity s is capable of accommodating more battery cells 20. In other words, the space utilization rate of the accommodating cavity s is higher, the battery pack 100 is capable of having a higher energy density, and the battery pack 100 has a higher range.

In another aspect, the present application further provides an electrical apparatus. The electrical apparatus includes the battery pack 100 provided in any one of the above embodiments, and the battery pack 100 is used for providing electric energy to the electrical apparatus. The introduction of the electrical apparatus may be obtained with reference to records in the above description, which will not be elaborated here.

The electrical apparatus includes the above battery pack 100, and therefore, it possesses all the beneficial effects of the above embodiments, which will not be elaborated here.

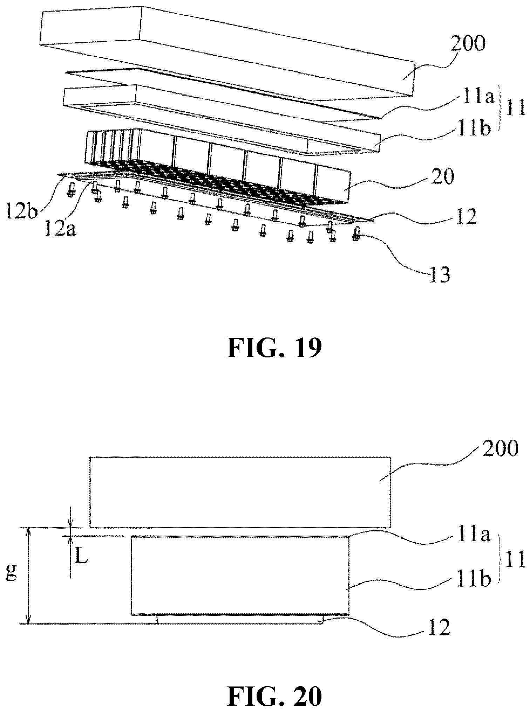

Fig. 17 is a schematic view of applying a battery pack 100 in a vehicle body 200 according to some embodiments of the present application. Fig. 18 is a first exploded state view of the structure shown in Fig. 17. Fig. 19 is a second exploded state view of the structure shown in Fig. 17.

In some embodiments, referring to Fig. 17 to Fig. 19, the electrical apparatus includes a vehicle 1000, and the battery pack 100 is arranged at the bottom of the vehicle body 200 of the vehicle 1000. The introduction of the vehicle 1000 may be obtained with reference to records in the above description, which will not be elaborated here.

The vehicle body 200 of the vehicle 1000 refers to the part of the vehicle 1000 used for carrying people and cargo, including the cockpit, passenger compartment, engine compartment, luggage compartment, and the like. The vehicle body 200 typically includes a case 22 of the vehicle body 200 and doors, windows, decorations, seats, air conditioning apparatuses, and the like located on the case 22 of the vehicle body 200. The case 22 of the vehicle body 200 usually refers to a structure composed of main force-bearing elements such as longitudinal beams, crossbeams, chassis, and pillars of the vehicle 1000, as well as sheet metal parts connected to them. In the embodiment of the present application, the battery pack 100 is arranged at the bottom of the vehicle body 200, which mainly refers to that the battery pack 100 is arranged at the bottom of the case 22 of the vehicle body 200.

At this point, arranging the battery pack 100 at the bottom of the vehicle body 200 will not occupy any internal space of the vehicle body 200, which helps reduce the volume and weight of the vehicle body 200.

Fig. 20 is a schematic view of a mounting relationship between a battery pack 100 and a vehicle body 200 according to some embodiments of the present application. In some embodiments, referring to Fig. 20, the main body 11 includes the carrier 11a located at the top of the box body 10, and the carrier 11a is used for defining the accommodating cavity s. In the vertical direction, a distance L between the carrier 11a and the vehicle body 200 meets: L≥0.

The battery pack 100 is located at the bottom of the vehicle body 200 and the carrier 11a is located at the top of the box body 10, and therefore, the carrier 11a in the battery pack 100 is the closest to the vehicle body 200. The distance L between the carrier 11a and the vehicle body 200 refers to a distance between the highest position of the carrier 11a and the vehicle body 200 located above it in the vertical direction. When the carrier 11a includes the carrying portion 11a1 and the connecting portion 11a2, the distance L between the carrier 11a and the vehicle body 200 is a distance between an outer surface of the carrying portion 11a1 away from the accommodating cavity s and the vehicle body 200 located above it.

When the distance L between the carrier 11a and the vehicle body 200 is equal to 0, the carrier 11a is attached to the vehicle body 200. When the distance L between the carrier 11a and the vehicle body 200 is greater than 0, the carrier 11a is separated from and does not attach to the vehicle body 200. It is understandable that at this point, the bottom cover 12 is at the bottom of the carrier 11a, and a distance g between the bottom cover 12 and the vehicle body 200 is greater than 0.

When the battery pack 100 is arranged below the vehicle body 200, a range of the distance from the bottom of the battery pack 100 to the vehicle body 200 is the mounting space occupied by the battery pack 100. When the carrier 11a is separated from the vehicle body 200, there will be a certain amount of wasted space between the battery pack 100 and the vehicle body 200. If the carrier 11a is attached to the vehicle body 200, the wasted space between the battery pack 100 and the vehicle body 200 may be included in the space range of the battery pack 100. In this way, when the same space is occupied below the vehicle body 200, the attaching of the battery pack 100 to the vehicle body 200 is capable of increasing the volume of the battery pack 100, and is further capable of increasing the battery capacity and energy density of the battery pack 100.

At this point, when the distance L between the carrier 11a and the vehicle body 200 is equal to zero, the battery pack 100 is capable of having a larger battery capacity and a higher energy density, and the vehicle 1000 has a strong range. When the distance L between the carrier 11a and the vehicle body 200 is greater than zero, the mounting of the carrier 11a is relatively flexible.

In some embodiments, referring to Fig. 17 to Fig. 19, the main body 11 includes the carrier 11a located at the top of the box body 10, and the carrier 1 1a is used for defining the accommodating cavity s. The battery pack 100 is mounted on the vehicle body 200 through the carri er 11a.

The battery pack 100 is located at the bottom of the vehicle body 200 and the carrier 11a is located at the top of the box body 10, and therefore, the carrier 11a in the battery pack 100 is the closest to the vehicle body 200. The battery pack 100 is mounted on the vehicle body 200 through the carrier 11a, and specifically, the carrier 11a may be fixed to the vehicle body 200 through the fastener 13 (such as a screw, a bolt, and a rivet), welding, and other methods.

When the battery cell 20 is arranged on the carrier 11a, the structure formed by the battery cell 20 and the carrier 11a is connected to the vehicle body 200, which can improve the top strength of the battery pack 100 and thereby enhancing the mounting strength of the battery pack 100.

In some embodiments, the carrier 11a is configured to form at least a part of the chassis of the vehicle body 200.

The chassis, as a part of the vehicle body 200, is a combination formed by four parts: a transmission system, a driving system, a steering system, and a braking system, and is used for supporting and mounting an engine of the vehicle 1000 and its various components and assemblies, thereby forming the overall shape of the vehicle 1000, bearing engine power, and ensuring normal driving.

The chassis is located at the bottom of the vehicle body 200, and the carrier 11a directly serves as at least a part of the chassis. That is, the carrier 11a is used for forming at least a part of the chassis of the vehicle body 200. In this way, the carrier 11a is integrated with the chassis of the vehicle body 200, and in this way, the space occupied by a gap between the traditional chassis and the battery pack 100 may be included in the battery pack 100 to increase the space of the battery pack 100, which helps increase the energy of the battery pack 100 and thereby is capable of improving the range of the vehicle 1000.

According to some embodiments of the present application, referring to Fig. 17 to Fig. 19, the electrical apparatus includes a vehicle 1000, and the battery pack 100 is arranged at the bottom of the vehicle body 200 of the vehicle 1000. The battery pack 100 includes the box body 10 and the battery cell 20, the box body 10 includes the carrier 11a located at the top of it, the battery cell 20 is located inside the box body 10 and suspended from the carrier 11a, the electrode terminals 21a of the battery cell 20 are located on the outer surface of the battery cell 20 away from the carrier 11a, and the carrier 11a forms at least a part of the chassis of the vehicle 1000.

At this point, the battery cell 20 is suspended from the carrier 11a, which can improve the strength of the carrier 11a and thereby enhance the strength of the top of the battery cell 20, so that the carrier 11a is capable of meeting certain for-bearing requirements when used as a chassis. At the same time, the electrode terminals 21a of the battery cell 20 are away from the carrier 11a, which allows the battery cell 20 to be directly mounted on the carrier 11a, thereby eliminating the gap between the battery cell 20 and the carrier 11a, and using the saved gap to increase the mounting space of the battery cell 20, which can increase the energy of the battery pack 100, and thus improve the range of the vehicle 1000.

The technical features of the above embodiments can be combined arbitrarily. In order to make the description concise, not all possible combinations of the technical features in the above embodiments are described. However, all the combinations of the technical features should be considered as falling within the scope described in this specification provided that they do not conflict with each other.

The above embodiments merely express several embodiments of the present application, the descriptions are relatively specific and detailed; however, they should not be construed as limiting the patent scope of the present application. It should be pointed out that, those of ordinary skill in the art may further obtain several variations and improvements without departing from the conception of the present application, and the variations and improvements all fall within the protection scope of the present application. Therefore, the protection scope of the patent of the present application shall subject to the appended claims.

## Claims

1. A battery pack, comprising:
a box body enclosing to form an accommodating cavity, the box body comprising a carrier located at its top and used for defining the accommodating cavity; and
a battery cell accommodated in the accommodating cavity;
wherein the carrier has a carrying surface facing the accommodating cavity, and the carrying surface is constructed as a plane.

2. The battery pack according to claim 1, wherein in a vertical direction, an area N1 of an orthographic projection of the carrying surface and an area N2 of an orthographic projection of the carrier meet: N1/N2≥0.2.

3. The battery pack according to claim 1 or 2, wherein the orthographic projection of the carrying surface is rectangular in the vertical direction.

4. The battery pack according to any one of claims 1 to 3, wherein the carrier has a carrying portion and a connecting portion, the connecting portion encloses and is connected to an edge of the carrying portion, the carrying portion is used for defining the accommodating cavity, and the connecting portion is connected to a part of the box body other than the carrier;
wherein an inner surface of the carrying portion facing the accommodating cavity is constructed to form the carrying surface.

5. The battery pack according to claim 4, wherein the carrying portion is arranged to protrude in a direction away from the accommodating cavity with respect to the mounting portion.

6. The battery pack according to claim 4 or 5, wherein an outer surface of the carrying portion away from the accommodating cavity is parallel to the carrying surface.

7. The battery pack according to any one of claims 1 to 6, wherein the battery cell is suspended from the carrying surface.

8. The battery pack according to claim 7, wherein an outer surface of the battery cell facing the carrier is a first outer surface, the battery cell comprises electrode terminals, and the electrode terminals are arranged on an outer surface of the battery cell other than the first outer surface.

9. The battery pack according to claim 8, wherein the battery cell has a second outer surface arranged opposite to the first outer surface, and the electrode terminals are arranged on the second outer surface.

10. The battery pack according to any one of claims 7 to 9, wherein the battery cell is bonded to the carrier.

11. The battery pack according to any one of claims 1 to 10, wherein the box body further comprises a bottom cover located at its bottom, the bottom cover is used for defining the accommodating cavity, and the bottom cover is arranged at an interval from the battery cell.

12. The battery pack according to any one of claims 1 to 10, wherein the box body further comprises a bottom cover and a frame, the frame encloses to form a cavity of which both ends in the vertical direction are run through, the bottom cover and the carrier respectively cover the opposite ends of the cavity in the vertical direction, and the bottom cover, the frame, and the carrier jointly enclose to form the accommodating cavity.

13. The battery pack according to claim 12, wherein the carrier is fixedly connected to or integrally formed with the frame.

14. An electrical apparatus, comprising the battery pack according to any one of claims 1 to 13, wherein the battery pack is used for providing electric energy to the electrical apparatus.

15. The electrical apparatus according to claim 14, wherein the electrical apparatus comprises a vehicle, and the battery pack is arranged at the bottom of the vehicle body.

16. The electrical apparatus according to claim 15, wherein in the vertical direction, a distance L between the carrier and the vehicle body meets: L≥0.

17. The electrical apparatus according to claim 15 or 16, wherein the battery pack is connected to the vehicle body through the carrier.

18. The electrical apparatus according to claim 17, wherein the carrier is configured to form at least a part of the chassis of the vehicle body.
